# EUROPÄISCHE PATENTANMELDUNG

(11) **EP 3 330 060 A1**
(43) Veröffentlichungstag der Anmeldung: **06.06.2018**
(21) Anmeldenummer: 17000935.1
(22) Anmeldetag: 06.06.2017
(51) Int. Cl.: B29C 65/18, B29C 65/00, B29C 65/20

(54) **HERSTELLUNG VON XPS-SCHAUMPLATTEN GROSSER BREITE UND/ODER LÄNGE DURCH SCHWEISSEN**

(30) Priorität: 30.11.2016 DE 102016014245
(71) Anmelder: Jackon Insulation GmbH, 39619 Arendsee (DE)
(72) Erfinder: Stein, Trygsland, 3212 Sandefjord (NO)
(74) Vertreter: Kaewert, Klaus

(57) **Zusammenfassung**

Nach der Erfindung werden extrudierte Schaumstoffplatten durch Verschweißen mehrerer Platten verbreitert und/oder verlängert.

## Beschreibung

Die Erfindung betrifft eine extrudierte Polystyrol(XPS)schaumplatte . Bei dem Polystyrol kann es sich auch um Mischungen mit anderen Kunststoffen handeln. Dabei beträgt der Polystyrolanteil mindestens 50Gew%. Außerdem ist das Polystyrol vorzugsweise eines Polystyrol-Butadien-CoBlockpolymer.

Polystyrol, seine Zusammensetzung und seine Herstellung, sind beschrieben in DE690310066, US2409910, US2515250, US2669751, US2848428, US2928130, US3121911, US3770688, US3815674, US3960792 US3960762.

Neue Energiesparverordnungen verlangen vom Bauherrn immer bessere Wärmedämmungen. Aufgrund der begrenzten Verfügbarkeit der nicht erneuerbaren Energieträger (Kohle, Gas, Erdöl) sind alle Verbraucher angewiesen, Energie zu sparen. Dies kann im starken Maße durch eine bessere Hausisolierung geschehen. Vor dem Hintergrund sind in der Vergangenheit Kunststoffschaumplatten mit einer Dicke von mehr als 100 mm, sogar mit einer Dicke von 200mm und mehr entstanden. Das war mit den HFCKW-haltigen Treibmitteln für Extruderschaumplatten ohne weiteres möglich. Die HFCKW-haltigen Treibmittel wurden jedoch wegen ihrer schädigenden Wirkung auf die Ozonschicht durch alternative Treibmittel seit 2002 komplett ersetzt. Seitdem werden Kunststoffschaumplatten aus Polystyrolschaum vorzugsweise mit Kohlendioxid als Treibmittel extrudiert. Allerdings finden dabei auch CoTreibmittel Verwendung. Dazu gehören zum Beispiel Kohlenwasserstoffe, Ketone, Ether und Alkohole.

Mit dem Einsatz von alternativen Treibmitteln haben sich bei der Herstellung dieser Kunststoffschaumplatten erhebliche Schwierigkeiten ergeben. Ab einer Dicke von 80 mm nehmen diese Schwierigkeiten stark zu.

Außerdem verschlechtern sich die Isoliereigenschaften mit dem Einsatz der meisten alternativen Treibmittel beim Extrudieren von dicken (> 80 mm) XPS-Schaumplatten. Die Isoliereigenschaft des XPS hängt sehr stark von der Zellstruktur des Schaums ab. Diese wird bei der Extrusion bestimmt durch das Verhältnis von Dämmstoffdicke zu Düsenspalt und der Differenz von Schmelzedruck vor dem Düsenspalt zum Druck nach der Düse. Der Schmelzedruck muß durch Verengung des Düsenspaltes vor dem Düsenspalt aufgebaut werden. Das zwingt zur Einhaltung bestimmter Düsenspaltgrenzen. Das heißt, der Düsenspalt kann nicht beliebig weit geöffnet werden, da mit seiner Hilfe der Druck in der Düse erzeugt wird, durch den gewährleistet wird, daß das Treibmittel nicht bereits in der Düse zum Aufschäumen der Schmelze führt.
Bei größer werdender Plattendicke ergibt sich dadurch eine Vergrößerung des Verhältnisses von Dämmstoffdicke zu Düsenspalt. Je größer dieses Verhältnis wird, um so schlechter wird die Zellstruktur und umso schwieriger ist die Herstellung eines Schaumes mit guten Isoliereigenschaften.

In der Vergangenheit ist mit der DE 4421016 A1 vorgeschlagen worden, die oben erläuterten Schwierigkeiten durch Herstellung von Platten mit sicher erreichbarer Dicke und Doppelung der Platten zu überwinden. Dabei war eine Verschweißung zwischen den Platten vorgesehen. Eine Bearbeitung der Platten an den Berührungsflächen war nicht vorgesehen.
Dieser Vorschlag wurde aber nicht umgesetzt, da beim Verschweißen von zwei Platten an der Schweißnaht eine Sperrschicht gegen Wasserdampfdiffusion entsteht und diese für die meisten Anwendungen des XPS als Wärmedämmstoff im Bauwesen erhalten bleiben muß. Die Sperrschicht wird durch die Extrusionshäute an den Berührungsflächen der Platten und besonders durch die bei der thermischen Verbindung entstehende zusätzliche Verhautung gebildet.

Ein Vorschlag zum Verschweißen von Platten findet sich auch in DE 3541053 A1, welche auf die Anmelderin zurückgeht. Dort sind zwar auch zusammengeschweißte Platten dargestellt. Zum Verschweißen dienen Heizkeile, die zwischen den zu verschweißenden Platten angeordnet sind. Wie bei der zuvor erläuterten Schweißtechnik bildet sich mit der einheitlichen Schweißung eine Sperrschicht.
Außerdem ist die Handhabung der Schweißvorrichtung an eine extreme Nachgiebigkeit der zu verbindenden Schaumplatten gebunden. Eine solche Nachgiebigkeit ist bei üblichen XPS-Schaumplatten für die Wärmedämmung nicht gegeben.

Der Vorschlag zum Verschweißen von Platten ist noch älter als die DE 3541053.

Bereits in der DE9201414 (die auch auf die Anmelderin zurückgeht) ist eine Verschweißung verschiedener Platten vorgesehen. Das hat jedoch ein anderes Ziel, nämlich die Verbindung von Platten unterschiedlicher Beschaffenheit. Es sollen Hartschaumplatten mit Weichschaumplatten verbunden werden, um eine höhere Schalldämmung zu schaffen. Für die Überwindung der Schwierigkeiten aus der Anwendung alternativer Treibmittel enthält die DE9201414 keinen Hinweis.

Noch älter als die DE9201414 ist die DE1704012.
Dort ist die Verschweißung von zwei aufeinander liegenden Schaumstoffblöcken dargestellt und beschrieben. Beim Verschweißen müssen die Schweißflächen erwärmt werden. Die Wärme wird mit Hilfe eines Heizdrahtes erzeugt, der zwischen den Schaumplatten an den Schweißflächen entlang geführt wird, Dabei wird eine Berührung des Heizdrahtes mit den Schweißflächen vermieden. Erkennbar soll damit eine Verschmutzung des Heizelementes durch den Kunststoffschaum verhindert werden. Zur Vermeidung der Berührung von Kunststoff und Heizelement ist ein Abstand zwischen Kunststoff und Heizelement gewahrt. Dies bewirkt ein Trennschwert, das zwischen den beiden aufeinander liegenden Schaumstoffblöcken durchgezogen wird. Das Trennschwert drückt die Oberfläche der Schaumstoffblöcke ein und bildet einen Hohlraum, in dem der Heizdraht geführt werden kann. Die Funktion des Trennschwertes kann dabei mit Rollen unterstützt werden. Die Rollen sind so angeordnet, daß der Hohlraum sich unmittelbar hinter dem Heizdraht wieder schließt. Dieser Vorschlag hat ein erhebliches Problem, denn die Verschweißung ist ausgesprochen schlecht. Selbst bei optimaler Rückformung der Oberfläche fehlt es an dem notwendigen Druck für eine ordentliche Verschweißung der erwärmten Fläche.
Darüber hinaus kann eine Verschweißung überhaupt nur durch Plastifizierung der Schweißflächen entstehen. Das hat aber ein Kollabieren des Schaumes zur Folge. Damit schmilzt die Oberfläche ab. Jedes Abschmelzen schafft unter den Voraussetzungen der DE 1704012 neuen Abstand der Schweißflächen und verursacht weitere Schwierigkeiten beim Schweißen.

Nachdem sich die Fachwelt Jahre um eine ausreichende Produktqualität von XPS-Platten bemüht hat, welche mit alternativem Treibmittel hergestellt worden sind, hat die EP2724843 sich erneut der Technik des Verbindens von XPS-Schaumplatten geringer Dicke zu einer XPS-Schaumplatte größerer Dicke zugewandt. Die Einzelheiten sind in der EP1213119 beschrieben. Dem lag die Erkenntnis zugrunde, daß es bei der Verbindung der XPS-Schaumplatten geringer Dicke zu einer XPS-Schaumplatte größerer Dicke auf die Diffunsionsfähigkeit ankommt.
Nach der DE1213119 wird Diffusionsoffenheit zwischen mindestens zwei verbundenen Platten hergestellt, indem
a) extrudierte Ausgangsplatten verwendet werden, die spätestens unmittelbar vor der Verbindung an der Berührungsfläche durch Bearbeitung von der Extrusionshaut befreit werden und
b) entweder eine Klebung mit einem diffusionsoffenen Kleber erfolgt
c) oder nur eine teilflächige Verbindung zwischen den Platten erfolgt.

Von Vorteil sind dabei völlig plane Berührungsflächen der zu verbindenden Platten. Dazu erfolgt entweder eine Bearbeitung der Ausgangsplatten
d) an den Berührungsflächen und den gegenüberliegenden Flächen oder
e) einseitig an den Berührungsflächen und durch zusätzliche Maßnahmen, welche die sich ergebende Plattenkrümmung verhindern oder kompensieren.
Das Herstellen einer planen Oberflläche vor dem Verbinden der Platten verhindert, daß an der Verbindungsstelle Hohlräume oder Kanäle entstehen, in die Wasser eindringen kann. Das Wasser würde die Isoliereigenschaften des Dämmstoffes herabsetzen und zusätzliche Sperren gegenüber einer Wasserdampfdiffusion bilden.
Wenn eine gleichmäßige Bearbeitung an beiden gegenüberliegenden Flächen der Ausgangsplatten erfolgt, wird eine Plattenkrümmung verhindert.
Die Plattenkrümmung kann bei nur einseitiger Bearbeitung der Ausgangsplatten auch durch Wärmebehandlung der nicht bearbeiteten, gegenüberliegenden Fläche ausgeglichen werden. Denkbar ist auch eine Verbindung der Ausgangsplatten mit ausreichendem Druck, der eine Krümmung aufhebt. Nach der Verbindung halten sich die einseitig bearbeiteten Ausgangsplatten insbesondere bei gleicher Dicke gegenseitig in der gewünschten ebenen Form.

Eine Plattenkrümmung läßt sich auch verhindern, indem zwei extrudierte Schaumstränge einseitig an den Berührungsflächen oberflächenbearbeitet werden und anschließend, vorzugsweise sofort miteinander verbunden werden. Aufgrund ihrer Länge legen sich die Schaumstränge leicht aneinander an und kann ein ebener Verlauf der Stränge gewahrt werden. Nach der Verbindung werden die Schaumstränge zu den gewünschten Platten abgelängt, auf Breite geschnitten und entsprechende Kantenprofile eingearbeitet.

Durch die Oberflächen-Bearbeitung werden je nach Qualität der Ausgangsplatten 1 bis 10 mm der Plattendicke entfernt.

Als Bearbeitung eignet sich zum Beispiel ein Schneiden durch Fräsen, Hobeln, Schneiden oder Sägen.

Der diffusionsoffene Kleber soll die Diffusionsoffenheit der Platte nicht mehr als um 50% herabsetzen, vorzugsweise nicht mehr als 20% verändern. Noch weiter bevorzugt wird ein Kleber verwendet, der die Diffusionsoffenheit der Platte gar nicht beeinträchtigt. Die Diffusionsoffenheit der Platten läßt sich leicht messen. Danach kann der Kleber aus den am Markt verfügbaren Klebern ausgewählt werden.

Die Verwendung diffusionsoffener Kleber ist zwar an sich bekannt. So verweist zum Beispiel die DE 68911643 T2 auf eine diffusionsdurchlässige und eine unterbrochene Klebeschicht zwischen Textilen und zwischen Autositzen. Auf die Lösung des Problems dicker, halogenfreigetriebener XPS-Platten ist daraus jedoch kein Hinweis zu entnehmen.

Bei teilflächiger Verbindung der Ausgangsplatten ist die Diffusionsoffenheit des Verbindungsmaterials nicht ausschlaggebend.
Es kann mit nicht diffusionsfähigem Kleber gearbeitet werden.
Es kann auch stellenweise geschweißt/geklebt werden.

Die einzelnen Verbindungsstellen sollen möglichst gleichmäßig über der Gesamtfläche verteilt sein und klein sein, so daß die ausdiffundierenden bzw. durchdiffundierenden Gase wie z.B. Treibmittel und Wasserdampf möglichst geringe Wege vorbei an den nicht diffusionsfähigen Verbindungsstellen zurücklegen müssen.
In dem Sinne sollen die Verbindungsstellen bei punktweiser oder fleckenweiser Ausbildung einzeln eine Ausdehnung besitzen, die vorzugsweise nicht größer als 25 Quadratzentimeter, vorzugsweise nicht größer als 2,5 Quadratzentimeter und noch weiter bevorzugt nicht größer als 0,25 Quadratzentimeter besitzen.

Bei streifenförmigen Verbindungsstellen werden die Streifen so gestaltet, daß sie in Ihrer Fläche und Ihrem Abstand die gleichen Verhältnisse wie die punktweisen bzw. fleckenweisen Verbindungsstellen wiedergeben.

Nach der EP 1213119 sollen von der gesamten Berührungsfläche zwischen den zu verbindenden Ausgangsplatten soll höchstens 80%, vorzugsweise höchstens 50% und noch weiter bevorzugt höchstens 20% durch Schweißflächen oder Klebeflächen verschlossen sein.

Wahlweise können auch nicht oder schlecht diffusionsfähige Reaktionskleber bzw. Hot-MeltKleber, die sofort haften, und hoch diffusionsfähige Kleber kombiniert werden, die erst mit der Zeit eine Klebekraft entwickeln. Die Kombination erfolgt dann vorzugsweise durch Auftrag der verschiedenen Kleber an unterschiedlichen Klebeflächen.
Mit der Kombination kann eine sehr schnelle Verbindung der Ausgangsplatten erreicht werden.
Eine schnelle Verbindung ist von Vorteil, wenn z.B. zwei Ausgangsplatten parallel zueinander und übereinander extrudiert werden, um sie nach einseitiger Oberflächenbearbeitung miteinander zu verbinden.

Zum Auftragen von Kleber eignen sich Klebewalzen oder Düsen, aus denen der Kleber gesprüht wird. Mit den Walzen läßt sich jede gewünschte Verteilung (sowohl hinsichtlich der flächenmäßigen Ausdehnung als auch hinsichtlich der Dicke des Auftrages) des Klebers auf die Berührungsflächen herbeiführen. Der Kleberauftrag kann dabei wie ein Farbauftrag gehandhabt werden. In dem Sinne sind anstelle der Walzen auch Auftragsplatten nach dem Vorbild von Druckplatten geeignet.
Düsen sind als Klebewerkzeug besonders für Hot-Meltkleber geeignet. In der beheizten Düse ist der Kleber bei entsprechender Erwärmung so dünnflüssig, daß er als Flüssigkeit aufgesprüht werden kann. Der Kleber kann dabei in der Form von Tröpfchen oder als Strahl oder als geschlossener Film gesprüht werden. Zur Erreichung eines teilflächigen Kleberauftrages können die Kleberstrahlen in Abständen voneinander und die Tröpfchen in entsprechender Streuung aufgetragen werden.
Für den Auftrag eines diffusionsoffenen Klebers ist gleichfalls ein tropfenförmiger oder streifenförmiger oder geschlossener Film Auftrag geeignet. Es kann auch ein Aufstrich mittels Quast oder dergleichen erfolgen.

Alternativ oder zusätzlich ist eine weitere Methode zur Bewirkung ausreichender Wasserdampfdiffusion vorgesehen. Diese Variante setzt auf eine mechanische Verbindung der Platten. Die aneinanderliegenden bzw. sich berührenden Platten werden durch mechanische Verbindung aneinander gehalten. Die Verbindung kann durch den oben beschriebenen teilweisen Kleberauftrag und/oder durch diffusionsoffenen Kleber an den Berührungsflächen unterstützt werden. Wahlweise kann auch eine mechanische Verbindung ohne Kleber an den Berührungsflächen bewirkt werden. In der zuletzt beschriebenen Situation kann die Diffusion nicht durch Kleber behindert werden.

Die mechanische Verbindung wird durch Verbindungselemente bewirkt, die an den Plattenseiten in die Platten greifen und/oder die Platten umgreifen. Diese Verbindung kann punktförmig und/oder linienförmig und/oder flächenweise erfolgen. Die Befestigungsmöglichen mit Verbindungselementen können den Verbindungsmöglichkeiten mit dem Kleber nachgebildet werden und umgekehrt.

Die Befestigungspunkte haben eine der flächigen Ausdehnung der Befestigungselemente entsprechende Ausdehnung. Die Bezeichnung als Punkte entspricht der Fachsprache, obwohl es sich um Flächen handelt.
Vorzugsweise sind die Befestigungspunkte gleichmäßig über der Berührungsfläche verteilt. Wahlweise verteilen sich die Befestigungspunkte auch entsprechend der Verteilung der Zugkräfte in den Platten. Die erwarteten Zugkräfte resultieren aus der Belastung der Platten und/oder aus den belastungsunabhängigen Plattenverformungen.

Die Befestigungslinien haben eine der flächigen Ausdehnung der Befestigungselemente entsprechende Ausdehnung. Die Bezeichnung als Linien entspricht der Fachsprache, obwohl es sich um Flächen handelt.
Die linienförmige Befestigung kann geradlinig und/oder gekrümmt verlaufen. Vorzugsweise verlaufen die Befestigungslinien geradlinig und quer über die gesamte Berührungsfläche.
Die Befestigungslinien können entsprechend den oben beschriebenen Befestigungspunkten verteilt sein.
Für die Verteilung der Befestigungslinien gilt das gleiche wie für die Verteilung der Befestigungspunkte.

Wahlweise haben die Verbindungselemente die Form von Ankern. Dabei finden sich an den Verbindungselementen verdickte Stellen, die den Verbindungselementen die notwendige Ausreißfestigkeit im Schaum geben.
Die Ausreißfestigkeit kann auch auf andere Weise als durch Verdickung erzielt werden. Z.B. besitzen verschiedene gegensätzlich geneigte Verbindungselemente aufgrund ihrer gegensätzlichen Neigung bereits eine vorteilhafte Ausreißfestigkeit.
Vorzugsweise finden lang gestreckte, auf ihrer Länge unprofilierte Verbindungselemente für die Verbindungsvariante mit gegensätzlicher Neigung Anwendung. Dabei können die Verbindungselemente durch Ablängen einfacher Profilstränge oder durch Ausschneiden aus Platten gewonnen werden.
Wahlweise werden die Verbindungselemente außerdem in den Platten verklebt. Das erhöht die Ausreißfestigkeit.
Für die Verbindungselemente werden Ausnehmungen in die Platten eingearbeitet. Die Ausnehmungen werden den Verbindungselemente angepaßt oder umgekehrt.
Günstig ist die Verwendung von Fräsern für die Herstellung von Ausnehmungen. Geeignet sind sowohl Scheibenfräser als auch Fingerfräser und Stirnfräser.

Mit Fräsern kann in kürzester Zeit eine Ausnehmung hergestellt werden.
Die Fräserbewegung kann CNC-gesteuert oder mittels Schablonen gesteuert sein. Einfache Bewegungen lassen sich auch mit Endschaltern steuern.

Mit dem Fräser lassen sich auch flache Ausnehmungen für Verbindungselemente in den Schaum einarbeiten, in welche die Verbindungselemente seitlich eingelegt werden. Hier kann die Form der Verbindungselemente und der Ausnehmungen noch weiter variieren. Wahlweise werden sogar seitliche Formen mit seitlichen Kurven und/oder Geraden mit solchen Formen zur Plattenmitte hin an den Verbindungselementen kombiniert.

Die verschiedenen Fräser haben in Bezug auf die Platte unterschiedliche Arbeitshaltungen, zum Teil aber auch charakterische Arbeitshaltungen. Der Fingerfräser kann unterschiedlich stehen. Der Scheibenfräser verläuft mit seiner Arbeitsebene/Richtung entsprechend den Ausnehmungen regelmäßig quer zur Plattenlängsrichtung und geneigt zur Plattenebene, gegebenenfalls auch geneigt zur Plattenlängsrichtung. Der Stirnfräser steht mit seiner Arbeitsrichtung wie der Scheibenfräser.

Neben der spanabhebenden Bearbeitung durch Fräser besteht die Möglichkeit Nutzen, Ausnehmungen usw. durch CNC gesteuerte Glühdratschneidetechnik herzustellen.

Wahlweise werden die Ausgangsplatten einzeln (vor Aufeinanderlegen) bearbeitet oder werden die Kunststoffschaumplatten mit aufeinander gelegten Ausgangsplatten bearbeitet.

Für die Verbindungselemente ist vorzugsweise der gleiche Kunststoff wie für die Ausgangsplatten vorgesehen, bei XPS-Platten also XPS. Durch unterschiedliche Extrusion können unterschiedliche Raumgewichte anfallen. Vorzugsweise soll das Raumgewicht der Verbindungselemente und der Platten nicht mehr als 20 kg pro Kubikmeter, besser nicht mehr als 5 kg pro Kubikmeter voneinander abweichen.

Die Verbindungselemente werden wahlweise nach seitlicher Bearbeitung der Platten eingesetzt. Dann ist eine ausreichende Maßhaltigkeit vorgesehen.
Wahlweise werden die Verbindungselemente nach der Bearbeitung eingesetzt. Dann ist ein Übermaß der Verbindungselemente vorgesehen, so daß die Verbindungselemente von der seitlichen Bearbeitung erfaßt werden.

Die Verbindung ist oben an zwei Ausgangsplatten beschrieben. Nach der EP 1213119 lassen sich aber auch 3 und mehr Platten miteinander verbinden

Die mit der EP 1213119 vorgeschlagene Technik hat überraschender Weise noch weitere Vorteile, denn mit dieser Technik kann die Anzahl der zu extrudierenden Dickenformate reduziert werden. Z.B. lassen sich aus 60iger Platten (die Zahl bezeichnet im folgenden die Dicke in mm) eine 120iger Platte oder eine 180iger Platte oder eine 240iger Platte herstellen; aus einer 50iger Platte eine 100eter Platte, eine 150iger Platte, eine 200eter Platte oder eine 250iger Platte. In den beschriebenen Fällen ergeben sich aus einem einzigen Dickenformat durch Doppelung/Verbindung bereits drei bzw. vier weitere handelsübliche Dickenformate. Es können auch unterschiedlich dicke Platten miteinander kombiniert werden, z.B. 50iger und 40iger Platen oder 70iger und 80iger Platten, wenn keine Gefahr eine Plattenkrümmung verursacht wird.

Vorzugsweise entsteht durch die Verbindung eine neue Platte mit einer Mindestdicke von 70 mm.

Wahlweise werden zur Herstellung von Platten mit Nut und Feder drei Ausgangs-Platten im gedoppelt, wobei die mittlere Ausgangs-Platte gegenüber den beiden anderen Ausgangs-Platten (die in liegender Anordnung oben und unten liegen) so versetzt wird, daß sie an zwei Plattenseiten zurückspringt und eine Nut bildet und an den gegenüber liegenden beiden Plattenseiten vorspringt und eine Feder bildet. So hergestellte Platten können schließend verlegt werden, wobei Federn der einen Platte in die Nuten angrenzender anderer Platten greifen.

Wahlweise werden zur Herstellung von Platten mit Stufenfalz zwei Ausgangs-Plattem gedoppelt, wobei die eine Ausgangs-Platte gegenüber der anderen Ausgangs-Platte versetzt ist. Das heißt, die eine Ausgangsplatte springt an zwei Seiten zurück und an den verbleibenden anderen Seiten vor. Dadurch können die entstandenen Platten gleichfalls schließend verlegt werden, indem sich die Platte an allen Seiten mit dem Stufenfalz der angrenzenden anderen Platten überlappt.

Bei der Herstellung von Nut und Feder bzw. Herstellung von Stufenfalz mit der Dopplung ergibt sich zusätzlich eine Einsparung an Schaum, weil die herkömmliche Konfektionierung des Schaumstranges ein Ausfräsen von Nut/Feder und Stufenfalz vorsieht, verbunden mit einem entsprechend hohen Verzehr des Schaumstrangrandes.

Die Technik der EP1213119 kann auf verschiedene Kunststoffe Anwendung finden. Dazu gehören Polystyrol, Polyethylen, Polypropylen, Ehtylen und Propylencopolymere.

Nach der EP1213119 ist wahlweise eine diffusionsoffene Verklebung oder eine teilflächige Verklebung der XPS-Schaumplatten geringerer Dicke zu einer XPS-Schaumplatte größerer Dicke vorgesehen. Die diffusionsoffene Verklebung hat sich bewährt.
Ein anderer Hersteller von XPS-Schaumplatten hat sich der anderen Variante der EP1213119, nämlich der teilweisen Verschweißung zugewendet. Dabei kommen Schweißbalken zum Einsatz, die sich quer zur Längsrichtung der XPS-Schaumplatten erstrecken und im Längsschnitt nach oben und nach unten eine Verzahnung zeigt. Die Verzahnung zeigt eine Vielzahl von der Balkenmitte gegen die XPS-Schaumplatten weisenden Spitzen. Zwischen den Spitzen finden sich naturgemäß Vertiefungen.

Der Schweißbalken ist beheizt. Die Spitzen berühren die Schweißflächen der miteinander zu verbinden XPS-Schaumplatten. Durch die Berührung kommt es zu einer Wärmeübertragung und zu einem Aufschmelzen der Schweißflächen. Anschließendes Zusammendrücken der Schweißflächen führt zu der gewünschten Verschweißung/Verbindung der XPS-Schaumplatten.

Auch die EP2724843 knüpft an die in der EP1213119 gelehrte offenporige Verbindung an. Sie wendet sich dabei der Variante Verschweißung zu. Allerdings wird nicht die in der EP1213119 offenbarte teilflächige Verschweißung weiterentwickelt. Vielmehr wendet sich die EP2724843 wieder einer vollflächigen Verschweißung zu. Das klingt zwar widersprüchlich, weil mit der vollflächigen Verschweißung die Vorstellung einhergeht, daß eine geschlossene Sperrschicht entsteht.
Nach der EP2724843 soll jedoch trotz der vollflächigen Verschweißung keine geschlossene Sperrschicht entstehen.
Die EP2724843 knüpft daran an, daß vom XPS-Schaum nach Entfernen der Extrusionshaut mehrere tausend Schaumzelle (ca 1000 bis 10000 je Quadratdezimeter) nebeneinander liegend angeschnitten werden . Ein entsprechender feinzelliger Polystyrolschaum hat zum Beispiel Zellgrößen von 0,05 bis 0,6 mm. Die Zellmembranen/Zellwände zeigen eine Dicke, welche gleich einem 1/5 bis 1/50 des Zelldurchmessers ist.
Nach der DE2724843 wird eine diffusionsdurchlässige Schweißschicht mit einer Schockplastifizierung der Schweißfläche erreicht. Das wird durch schlagartige Beaufschlagung der Schweißfläche mit hoher Temperatur erreicht.
Dabei heißt "hohe Temperatur" eine Temperatur von mindestens 100 Grad Celsius über der Schmelztemperatur/Erweichungstemperatur, vorzugsweise mindestens 200 Grad Celsius und noch weiter bevorzugt mindestens 300 Grad Celsius über der Schmelztemperatur/Erweichungstemperatur und höchst bevorzugt mindestens 400 Grad Celsius über der Schmelztemperatur/Erweichungstemperatur liegt.
Schockerwärmung beinhaltet darüber hinaus eine extrem kurzfristige Wärmebeaufschlagung Je kürzer die Wärmebeaufschlagung ist, desto höher kann die Temperatur sein und desto geringer kann die Dicke der Schweißschicht zwischen zwei miteinander verschweißten XPS-Schaumplatten gehalten werden. Je dünner die Schweißschicht ist (je geringer die Dicke der Schweißschicht ist), desto größer ist die Dampfdiffusionsdurchgängigkeit.

Durch die in der EP2724843 vorgesehene Schockerwärmung kann eine extrem geringe/dünne Kunststoffschaumschicht aufgeschmolzen werden. Dabei entsteht aus den Zellmembranen, die sich in dieser Schicht befinden, eine Schmelze. Bei Verwendung eines Heizschwertes wird diese Schmelze hautbildend über die erwärmte Plattenoberfläche gezogen. Es bildet sich an jeder der miteinander zu verbindenden Platten eine solche Haut. Wenn sich gleichwohl nach dem Schweißen ein Überschreiten der vorgesehenen Diffusionsgrenzen ergibt, wird die Geschwindigkeit erhöht und/oder die Erwärmung reduziert, um die Menge der erzeugten Schmelze zu reduzieren.
Wenn sich dagegen zeigt, daß die Diffusionsoffenheit größer ist als benötigt, kann die Geschwindigkeit verringert werden und/oder die Erwärmung erhöht werden, um mehr Schmelze zu erzeugen, die bei der Berührung des Heizschwertes/Heizkeiles mit der Plattenoberfläche über die Plattenoberfläche gezogen wird. Das verursacht mehr Schmelze und führt dann dazu, daß von der Plattenoberfläche eine dickere Schaumschicht aufgeschmolzen wird. Dabei kann die Dicke der an einer Plattenoberfläche aufgeschmolzenen Schaumschicht größer als der Zelldurchmesser sein.
Vorzugsweise ist die Dicke der aufgeschmolzenen Schaumschicht nicht größer(höchstens gleich) als der dreifache Zelldurchmesser, noch weiter bevorzugt nicht größer(höchstens gleich) als der zweifache Zelldurchmesser und höchst bevorzugt höchstens gleich(also gleich oder geringer) der Dicke eines Zelldurchmessers. Die Dicke der dabei über die Plattenoberfläche gezogenen Haut ist aufgrund des Schaumfaktors jeweils nur ein kleiner Bruchteil der Dicke der aufgeschmolzenen Schaumschicht, so daß die Dicke der Schweißnaht, welche sich aus beiden Häuten der miteinander zu verbindenden Plattenoberflächen zusammensetzt, in der Regel kleiner als der Zelldurchmesser sein kann. Der Schaumfaktor ist der Faktor der Volumensvergrößerung, welche eine Polystyrolschmelze durch die Zugabe von Treibmitteln in den Extruder nach dem Austreten aus dem Extruder erfährt.
Mit zunehmender Dicke der über eine Plattenoberfläche gezogenen Haut erhöht sich die Festigkeit der Verschweißung.

Die Messung der Dampfdiffusionswiderstandszahl erfolgt vorzugsweise nach DIN EN 12086.

Bei der Schockerwärmung kann die Temperatur der Wärmebeaufschlagung auch höher als die Zündtemperatur von Polymermatrix und/oder Treibmittel sein. Vor dem Hintergrund kann auch eine Wärmebeaufschlagung mit einer Temperatur vorkommen, die 500 oder 600 Grad Celsius über der Schmelz-/Erweichungstemperatur liegt.

Die Dauer(Einwirkungsdauer) der Wärmebeaufschlagung kann sich bei streifenförmiger Wärmebeaufschlagung der XPS-Schaumplatten einer über die ortsfeste Wärmequelle wandernden XPS-Schaumplatte auf wenige Sekunden pro durchlaufendem Meter Kunststoffschaumplatte beschränken. Die Sekunden pro Meter ergeben eine bestimmte Geschwindigkeit, mit der sich die XPS-Schaumplatten über die ortsfeste Wärmequelle hinweg bewegen.
Die Einwirkungsdauer pro durchlaufenden Meter kann zum Beispiel maximal4 Sekunden betragen, vorzugsweise beträgt die Einwirkungsdauer höchstens 3 Sekunden, noch weiter bevorzugt höchstens 2 Sekunden und höchst bevorzugt höchstens 1 Sekunde. Die Einwirkungsdauer kann auch 0,5 oder auch nur 0,2 Sekunden betragen. Bei der angegebenen Einwirkungsdauer kann die Bewegungsgeschwindigkeit der Platten gegenüber der ortsfesten Wärmequelle den Bruchteil eines Meters pro Sekunde bis zu mehreren Metern pro Sekunde betragen, zum Beispiel 0,5 bis 5m pro Sekunde.

Die Verkürzung der Einwirkungsdauer findet dort ein Ende, wo mit den vorhandenen Mitteln keine ausreichende Verschweißung mehr entsteht. Dies läßt sich durch Prüfung der Schweißnahtfestigkeit klären. Nach der EP2724843 soll die Schweißnaht mindestens eine Festigkeit von 0, 15 Newton pro Quadratmillimeter, vorzugsweise mindestens eine Festigkeit von 0,2 Newton pro Quadratmillimeter, noch weiter bevorzugt mindestens 0,25 Newton pro Quadratmillimeter und höchst bevorzugt mindestens 0,3 Newton pro Quadratmillimeter aufweisen.
Die EP2724843 macht sich bei der Schockerwärmung/plastifizierung die geringe Wärmeleitfähigkeit von Kunststoffschaum zunutze. Auch wenn die Schweißfläche mit hoher Temperatur beaufschlagt wird, dauert es aufgrund der schlechten Wärmeleitfähigkeit von XPS-Schaum einige Zeit, bis die Wärme tief in den XPS-Schaum eingedrungen ist. Nach der EP2724843 wird die Erwärmung abgebrochen, bevor die Wärme mehr als erforderlich in den XPS-Schaum eingedrungen ist.
Im Extremfall kann die Plastifizierung der Schweißflächen auf die an der Oberfläche liegende Schicht von Schaumzellen beschränkt werden.

Für die Erwärmung von Schweißflächen sind verschiedene Verfahren und Vorrichtungen bekannt. Die meisten bekannten Verfahren lassen sich auch für Schockerwärmung nutzen. Zum Teil ist die Anwendung bereits bekannt. Dazu gehört die in der DE1704012 offenbarte Beaufschlagung mit Strahlungswärme. Aus der DE4421016 ist ein Verfahren zur Erzeugung von Berührungswärme bekannt. Das geschieht mittels eines Heizschwertes oder mittels eines Heizkeiles. Das Heizschwert hat tatsächlich die Querschnittsform eines Schwertes. Allerdings fehlen die schwerttypische Spitze und der Handgriff. Das Heizschwert ist vorzugsweise an beiden Enden fest angeordnet. Nach der DE4421016 besitzt das Heizschwert eine geringe Dicke von 1 bis 10 mm, vorzugsweise 2 bis 4 mm. Von Vorteil soll sein, daß das Heizschwert extrem flach ausgebildet ist.
Für den Heizkeil gilt vorzugsweise das gleiche.

Das Heizschwert oder Heizkeil kann nach der DE4421016 elektrisch oder mit einem durchfließenden Heizmedium auf die notwendige Schweißtemperatur gebracht werden. Beide Beheizungsvarianten lassen sich sicher beherrschen. Bei geringen Temperaturen kann das System mit dem durchfließenden Heizmedium gegenüber der elektrischen Beheizung Vorteile haben. Umgekehrt kann die elektrische Beheizung bei höheren Temperaturen gegenüber dem System mit dem durchfließenden Heizmedium Vorteile haben. Vorzugsweise ist deshalb bei der Schockplastifizierung bei Temperaturen, welche 200 Grad Celsius und mehr über der Schmelz-/Erweichungstemperatur von Polystyrol liegen, eine elektrische Beheizung des Heizschwertes oder Heizkeiles vorgesehen.
Für die Beheizung ist auch eine extrem dünnwandige Ausbildung des Heizschwertes oder Heizkeiles auch von Vorteil. Die Dünnwandigkeit von 1 mm hat auch bei elektrischer Beheizung den Vorteil, daß die Wärmezufuhr im Falle einer Betriebsstörung schlagartig unterbrochen werden kann. Es gibt dann kaum Probleme nachlaufender Wärmezufuhr.

Die Heizschwertbreite soll nach der DE4421016 in Abhängigkeit von der Heizschwerttemperatur 20 bis 100 mm. Die richtige Breite soll durch versuchsweises Einsetzen verschiedener Heizschwerter mit unterschiedlicher Breite ermittelt werden. Das gleiche gilt für den Heizkeil.
Die Länge des Heizschwertes ist nach der DE4421016 so bemessen, daß es sich über die gesamte Breite der XPS-Schaumplatten erstreckt. Das gleiche gilt für den Heizkeil.

Das Heizschwert besteht aus einem Material, das bei der gewählten Schweißtemperatur ausreichend warmfest ist und keine übermäßige Verformung erfährt. Zu solchen Materialien gehören warmfeste Metalle, insbesondere warmfeste Stähle, aber auch Keramik bzw. Glaskeramik. Die Metalle haben gegenüber anderen Materialien den Vorteil besserer Wärmeleitung. Vorzugsweise finden mehrschichtige Heizschwerter aus Metall Anwendung. Dabei bildet die innere Schicht die Wärme durchleitende Tragschicht und die äußere Schicht die Berührungsfläche mit dem Kunststoff. Als äußere Schicht und Trennmittel eignen sich zum Beispiel Nickel, Chrom, Molybdän, Wolfram,Wolframkarbid, Aluminiumoxid, Chromoxid, Zirkoniumoxid sowie Mischungen davon und/oder Verbundschic hten davon, d.h. übereinander liegender Schichten davon. Die Schichtdicke kann zum 0,02 bis 1,5mm, vorzugsweise 0,05 bis 0,1mm, betragen. Die Metalle, Karbide und Oxide werden wahlweise wie eine Pulverlackierung aufgebracht. Dabei erfahren die Partikel und das Heizschwert eine unterschiedliche elektrische Beladung, so daß die Pulverpartikel an dem Heizschwert haften. In einem Ofen können die Partikel dann auf dem Heizschwert miteinander verschmolzen werden.

Wahlweise sollen auch mehrere Heizschwerter quer zu den Platten und in deren Bewegungsrichtung hintereinander angeordnet werden.

In der DE 4421016 wird auch vorgeschlagen, zur Vermeidung von Anbackungen eine Teflonbeschichtung des Heizschwertes vorzunehmen. Die Teflonbeschichtung hat einen Schmelzpunkt, der bei etwa 330 Grad Celsius liegt. Deshalb ist Teflon bis etwa 300 Grad Celsius belastbar. Darüber hinaus ist nach der EP2724843 ein anderes Trennmittel vorgesehen.
Zu den warmfesteren Trennmitteln gehört zum Beispiel Bornitrid, aber auch metallische Beschichtungen
Das gleiche gilt im Falle des Heizkeiles.

Aus der DE4421016 ist bekannt, daß sich das Heizschwert zwischen den miteinander zu verbindenden XPS-Schaumplatten quer zu deren Längsrichtung erstreckt. In der DE4421016 ist eine Breite von 20 bis 100 mm vorgesehen. Daraus ergibt sich ein mittlerer Breitenbereich von 50 bis 70 mm.
Entsprechendes gilt für den Heizkeil.

Bei einem Heizschwert/Heizkeil des mittleren Breitenbereiches und einer Temperatur, die 400 Grad Celsius über der Schmelz-/Erweichungstemperatur des Polystyrols liegt und bei einer Einwirkungszeit von rund 2 Sekunden pro durchlaufendem Meter Kunststoffschaumplatte kann nach dem Zusammendrücken der schockplastifizierten Schweißflächen an den XPS-Schaumplatten eine durch den Schweißvorgang veränderte Schaumschicht (die im folgenden als Schweißschicht bezeichnet wird) mit einer Dicke von 0,2 bis 0,7 mm, im Mittel von 0,4 bis 0,5mm beobachtet werden. Dabei ist zu berücksichtigen, daß durch das Zusammendrücken der beiden zu verbindenden XPS-Schaumplatten nicht nur eine Verbindung an den plastifizierten Schweißflächen entsteht, sondern auch eine Schaumschicht in den XPS-Schaumplatten eine Verformung erfährt, die unterhalb der Schweißfläche liegt und durch die Erwärmung eine Erweichung erfahren hat. Aufgrund dieser Verformung werden die betroffenen Schaumzellen mehr oder weniger zusammengedrückt. Jedoch ist dieser Bereich der Schweißschicht noch um einiges diffusionsoffener als ein ungeschäumtes Polystyrol, wie es in der Extrusionshaut der XPS-Platte vorkommt. Die vorstehenden Abmessungen der Schweißschicht und deren Beschaffenheit führen zu einem geringeren Wasserdampfdiffusionswiderstand als die Extrusionshaut der XPS-Platte.
Wahlweise kann die Wärmebeaufschlagung der Schweißfläche auch mit einer geringeren Temperatur und/oder mit längerer Einwirkungszeit erfolgen.
Nach der EP2724843 kann die Temperatur auch verringert werden und/oder die Einwirkungszeit auch verlängert werden, allerdings nur im Rahmen, dass die Diffusionsoffenheit der Schweißschicht erhalten bleibt. Dabei wird die Verringerung der Diffusionsoffenheit im Folgenden verstanden als Vergrößerung der Dampfdiffusionswiderstandszahl der durch Verschweißen von Ausgangsplatten entstandenen Platte größerer Dicke gegenüber der Dampfdiffusionswiderstandszahl von schließend aufeinander liegenden unverschweißten Platten.
Nach der EP2724843 soll die Diffusionsoffenheit der durch Verschweißen von XPS-Schaumplatten geringer Dicke zu XPS-Schaumplatten größerer Dicke höchstens um 50%, vorzugsweise um höchstens 35% und noch weiter bevorzugt um höchstens 20% und höchst bevorzugt um höchstens 10% verringert werden. Die %Angaben beziehen sich auf obige Definition. Der Unterschied in der Diffusionsoffenheit/Dampfdiffusionswiderstandszahl wird durch Vergleich ermittelt. Dabei kommt es auf gleiche Messungen an. Zweckmäßigerweise sollten die Messungen nach DIN EN 12086 mit Prüfklima A (23 Grad Celsius 0/50% relative Feuchtigkeit) durchgeführt werden.
In vorstehendem Rahmen kann die Temperatur der Wärmebeaufschlagung auch 50 Grad Celsius über der Schmelz-/Erweichungstemperatur des Polystyrols liegen und/oder kann die Dauer der Wärmeeinwirkung bis zu 10 Sekunden und mehr pro durchlaufendem Meter XPS-Schaumplatten betragen.

Wahlweise können die beiden miteinander verschweißten XPS-Schaumplatten anschließend auch mit einer oder mehreren weiteren XPS-Schaumplatten verschweißt werden.

Das anschließende Verschweißen mit weiteren XPS-Schaumplatten wie auch das gleichzeitige Verschweißen mit weiteren XPS-Schaumplatten erfolgt in gleicher Weise wie vorstehend erläutert.

Für das Verschweißen der vorgesehen XPS-Schaumplatten ist das in der DE4421016 dargestellte Heizschwert noch aus anderem Grunde wichtig. Das gleiche gilt für den Heizkeil. Das Heizschwert und der Heizkeil haben eine wichtige Führungsaufgabe. Es führt die beiden zu verbindenden XPS-Schaumplatten mit schwacher Neigung zueinander und zusammen. Vorzugsweise beträgt die Neigung, unter der die XPS-Schaumplatten zusammen geführt werden, 2 bis 10 Grad, noch weiter bevorzugt 3 bis 5 Grad. Trotz der geringen Neigung müssen sich die zusammen treffenden XPS-Schaumplatten noch verformen. Nach der DE 4421016 wird die Verformung dadurch bewirkt, daß die miteinander zu verschweißenden XPS-Schaumplatten durch einen Walzenspalt geführt werden und darüber hinaus zwischen Führungsrollen oder Walzen geführt sind. Der Abstand des Walzenspaltes von dem Heizschwert soll dabei so gewählt werden, daß die XPS-Platten auf dem Weg von dem Heizschwert in den Walzenspalt keine unzulässige Abkühlung erfahren.

Die Anwendung des aus der DE4421016 bekannten Heizschwert-Querschnittprofils beim Aufkaschieren von XPS-Schaumplatten ist nur bei kleineren Dicken bzw. mit dünnen Platten auf dickere XPS-Schaumplatten gelungen. Dabei hatten beide Schaumplatten ein Raumgewicht von rund 35 Kg pro Kubikmeter. Die dünnen XPS-Schaumplatten lassen sich leicht verformen. Die Verformung ist notwendig, um die XPS-Schaumplatten mit dem Heizschwert in Berührung zu bringen und danach die Platten miteinander zur Anlage zu bringen.
Solange die Festigkeit der XPS-Schaumplatten, die üblicherweise eine Länge von 1,25 m bei einer Breite von 0,6 m aufweisen, eine beschädigungsfreie Verformung erlaubt, ist selbst eine hin- und hergehende Verformung der XPS-Schaumplatten unproblematisch. Die hin- und hergehende Verformung ergibt sich, wenn die nach der Verschweißung oben liegende XPS-Schaumplatte der Verschweißungsanlage parallel zu der unten liegenden XPS-Schaumplatte zugeführt wird. Dann muß die oben zugeführte XPS-Schaumplatte zunächst gegen das Heizschwert und anschließend wieder zurück gebogen werden, um mit der unteren XPS-Schaumplatte wieder in eine Parallele zu kommen.

Sofern die Verformungsfähigkeit es erlaubt, kann sich die Verformung sogar auf eine von beiden zu verbindenden XPS-Schaumplatten beschränken. Dann wird die andere XPS-Schaumplatte gerade geführt und nicht verformt. Die gerade Führung einer XPS-Schaumplatte ist um vieles leichter als eine Führung unter hin- und hergehender Biegung.

Wenn jedoch dickere XPS-Schaumplatten mit geringerer Verformungsfähigkeit zu verarbeiten sind, kann es von Vorteil sein,
a) die notwendige Verformung entsprechend dem Vorschlag der DE4421016 auf beide miteinander zu verbindenden XPS-Schaumplatten zu verteilen und/oder
b) die notwendige Verformung durch Änderung der Zuführung zu verringern

Eine Reduzierung der Verformung entsteht schon, wenn das (zweischneidige) Schwert der DE4421016 nur in dem in dieser Druckschrift abgebildeten Bereich berührt wird. In dem Sinne kann anstelle des zweischneidigen Schwertes auch ein einschneidiges Heizschwert zum Einsatz kommen, welches die gleiche Berührungsfläche wie das Heizschwert der DE 4421016.

Wahlweise wird die Verformung noch weiter verringert, wenn anstelle des Heizschwertes ein Heizkeil mit geraden Flächen vorgesehen ist, auf den die zu verschweißenden XPS-Platten gerade, also ungekrümmt zulaufen. Die XPS-Schaumplatten müssen nach Verlassen des Heizkeiles bei ihrem Zusammentreffen in Krümmung gehen, um sich bei der weiteren Bewegung wieder zurück zu verformen. Der aus dieser Verformung beim ersten Zusammentreffen der Schaumplatten erwachsende Druck kann ganz oder teilweise als Schweißdurck genutzt werden.

Sofern der beim ersten Zusammentreffen der Schaumplatten erwachsende Druck unerwünscht ist, kann dem mit Folgendem Rechnung getragen werden:
Die Schwerter müssen nicht die in der DE 4421016 gezeigte Krümmung aufweisen, die zu einem linsenförmigen (bi-konvexen) Querschnitt führt. Die Schwerter können sich auch - von der Schneide ausgehend - nach innen (bi-konkav) krümmen.

Nach der EP2724843 kann eine solche Krümmung genutzt werden, um ein vorzugsweise vor der Berührung mit dem Heizschwert an der Schweißfläche in die gleiche Krümmung gebrachte XPS-Schaumplatte an dem Heizschwert entlang gleiten zu lassen. Nach Verlassen des Heizschwertes kann sich die XPS-Schaumplatte allenfalls wieder gerade zurückbiegen. Wenn die Bewegungsbahn der Mitte der miteinander verschweißten XPS-Schaumplatten sich als Tangente an die gekrümmte Heizfläche des Heizschwertes anschließt, so müßten sich die XPS-Schaumplatten nach Verlassen des Heizschwertes drucklos aneinanderlegen. Vorzugsweise ist die konkave Krümmung sehr gering, d.h. der zugehörige Krümmungsradius sehr groß.

Neben der Führung der XPS-Schaumplatten über das Heizschwert bzw. den Heizkeil ist noch eine weitere Führung vorgesehen. Zum Beispiel können entsprechend der DE 4421016 Rollen zur Führung der XPS-Schaumplatten vorgesehen sein. Die Rollen sind besonders günstig, solange es sich um eine gerade Führung handelt. Zwar können die Rollen insbesondere in einer sehr dichten Anordnung auch zur Erzeugung einer Krümmung genutzt werden. Zur Erzeugung einer Krümmung können Walzen mit größerem Durchmesser als Rollen aber von Vorteil sein. Für komplizierte Führungswege und besonders dicke Platten können Führungsbleche und/oder Vakuum-Transportriemen von Vorteil sein. Das gleiche gilt für Bänder. Bei der Verwendung von Bändern sind Plattenbänder aus Metall von Vorteil, die eine geringe Dehnung besitzen, verschleißfester sind und eine genauere Steuerung erlauben. In Betracht kommt auch eine Kombination aus Bändern/Plattenbändern und Rollen oder Walzen und Führungsblechen oder Vakuum-Transportriemen.

Die Genauigkeit der XPS-Schaumplattenführung ist wichtig. Die Platten sollen als Dämmplatten zum Einsatz kommen. Dazu sollen die Platten dicht aneinander liegen. Maßungenauigkeiten der verschweißten Platten können eine unzulässige Spaltbildung zwischen den Platten verursachen und zum Ausschuß der Platten führen.
Es werden entweder Platten verschweißt, die lediglich an der Schweißfläche bearbeitet sind und nach dem Verschweißen eine abschließende Oberflächenbearbeitung erfahren haben In dem Sinne ist es von Vorteil, Extrusionsstrangabschnitte zu erzeugen, deren Länge ein Vielfaches der Länge üblicher XPS-Schaumplatten ist, um die langen Extrusionsstrangabschnitte erst an der Schweißfläche zu bearbeiten, dann miteinander zu verschweißen und abschließend fertig zu bearbeiten.

Oder es werden fertig bearbeitete XPS-Schaumplatten mit ausreichender Genauigkeit miteinander verschweißt. Die notwendige seitliche Führung der fertig bearbeiteten XPS-Schaumplatten kann seitlich mit Führungsblechen und Führungsstangen erreicht werden. In Längsrichtung der XPS-Schaumplatten ist nach der EP2724843 vorzugsweise eine Gleichlaufsteuerung für die bewegten Platten vorgesehen. Dabei kann die Gleichlaufsteuerung ein Schrittschaltwerk beinhalten, das die Bewegung in einander schließend (ohne Unterbrechung) folgenden Schritten ausführt und die Bewegungsschritte der Platten abgleicht, um im Falle einer Differenz den einen Antrieb zu beschleunigen und/oder den anderen Antrieb zu verlangsamen, bis die Bewegungsschritte wieder übereinstimmen. Über die Schrittfolge kann außerdem ein Versatz der XPS-Schaumplatten herbeigeführt werden, der für die Herstellung von Platten mit Nut und Feder oder für die Herstellung von Platten mit Rand erforderlich ist.
In dem Fall würden zum Beispiel drei Platten zur Herstellung von dicken Platten mit Nut und Feder miteinander verschweißt. Von den drei Platten hätten die obere und untere Platte die gleiche Position zueinander, während die mittlere Platte durch Versatz gegenüber den anderen Platten am Rand der dicken Platte die Nut bzw. Feder bildet.
Für die Herstellung von dicken Platten mit Stufenfalz würden zum Beispiel zwei Platten miteinander verschweißt, wobei die oberen Platten gegen die unteren Platten durch Versatz am Rand eine Stufe bilden.

Es können aber auch wie bei der EP1213119 mehr Platten als zwei oder drei miteinander verschweißt werden.

Bei der Positionierung der XPS-Schaumplatten für die Verschweißung kann eine vordere und/oder hintere Kante jeder XPS-Schaumplatte zur Positionsmessung herangezogen werden und/oder an den XPS-Schaumplatten Markierungen zur Positionsmessung angebracht werden, Vorteilhaft kann sein, die Markierungen zwischen den einander folgenden XPS-Schaumplatten in der Form von Abstandshaltern anzubringen, um bei Platten mit Nut- und Feder oder bei Platten mit Stufenfalz auf Abstand zu bringen. Sonst würden die entstehenden dicken Platten zugleich am Rande miteinander verschweißt.

Mit Hilfe der Markierungen und mit Hilfe eines Rechners, können alle Positionen in Steuerbefehle für die Antriebe zur Bewegung der Schaumplatten umgeformt werden.

Wahlweise können auch mechanische Positionierungshilfen genutzt werden.
Dazu gehören zum Beispiel Bänder, welche die Platten mit Mitnehmern hintergreifen und gegen das Heizschwert bzw. Keil schieben. Die Position der Mitnehmer läßt sich wahlweise verändern. Während des Bandbetriebes ergibt sich die Position jeden Mitnehmers aus der Stellung des Bandes und muß nicht einzeln bestimmt werden.

Auch die Erfindung hat sich die Aufgabe gestellt, die Herstellung von XPS-Platten zu vereinfachen.
Nach der Erfindung wird das mit den Merkmalen des Hauptanspruches erreicht.
Die Unteransprüche beschreiben bevorzugte Ausführungsformen der Erfindung.
Dabei hat die Erfindung einen anderen Ansatz als die EP2724843. Während dort noch eine Verbindung der entstehenden Platten am Rand unbedingt verhindert werden soll, ist nach der Erfindung eine Verbindung am Rand unbedingt vorgesehen. Dem liegt folgende Erkenntnis zugrunde:
Beim Extrudieren wird das Polystyrol aus einer Granulatform in eine Schmelze überführt, und mit anderen Stoffen, insbesondere mit Treibmittel vermischt. Die Mischung wird anschließend homogenisiert und auf Austrittstemperatur gekühlt. Die Verarbeitung der Einsatzstoffe geschieht in einem Extruder. Das aufbereitete Material wird durch eine Düse aus dem Extruder ausgetragen. Der übliche Extruder für die Herstellung von XPS ist ein Einschneckenextruder. Der Einschneckenextruder hat eine kreisrunde Querschnittsform, resultierend aus den Funktionsteilen des Extruders. Die Form der Düse ist weitgehend der Form des gewünschten Produktes angepaßt. Bei der Herstellung von XPS-Platten ist die Düse dem Plattenquerschnitt angepaßt. Daraus ergibt sich eine lang gestreckte Form der Düse. Die aus dem Extruder austretende Schmelze muß in der Düse über deren gesamte Länge verteilt werden.
Bei anderen Extudern ergibt sich die gleiche Situation.
Der Planetwalzenextruder hat auch eine kreisrunde Querschnittsform, resultierend aus den Funktionsteilen des Planetwalzenextruders. Die Funktionsteile sind eine Zentralspindel, Planetspindeln und ein innen verzahntes Gehäuse bzw. eine innenverzahnte Gehäusebuchse. Die Planetspindeln laufen um die Zentralspindel in dem Gehäuse um. Dabei kämmen die Planetspindeln gleichzeitig mit der Verzahnung der Zentralspindel und der Verzahnung des Gehäuses bzw. der Gehäusebuchse.

Der Doppelschneckenextruder hat eine etwa ovale Form, resultierend aus den Funktionsteilen des Extruders. Die Funktionsteile sind zwei Schnecken, welche miteinander kämmen und von einem Gehäuse umgeben sind.

Die Breite der XPS-Platten beträgt üblicherweise 600mm. Auf diese Breite haben sich sämtliche Verarbeiter bzw. Abnehmer eingestellt. Die Verarbeiter haben passende Werkzeuge und passende Hilfsvorrichtungen für die XPS-Platten angeschafft. Deshalb versteht sich, daß die Verarbeiter und Abnehmer von sich aus immer die gleichen XPS-Platten bestellen. Es besteht auch keine Not andere Platten zu bestellen, weil sich aus den üblichen Platten viel größere Platten zusammen setzen lassen und überstehende Ende leicht abgetrennt werden können.

Die Erfindung hat sich gleichwohl mit der Frage auseinander gesetzt, wo größere XPS-Plattenformate zweckmäßig sind. Das ist bei allen größeren und geschlossenen Flächen der Fall. Solche Flächen kommen zum Beispiel vor
- *bei der Isolierung von Bodenplatten. Bodenplatten werden auch Gründungsplatten genannt. Auf den Bodenplatten wird das Gebäude aufgebaut.*
- *bei der Perimeterdämmung. Die Perimeterdämmung ist die Außendämmung an Gebäuden im erdberührten Bereich.*
- *bei Umkehrdächern. Bei der Herstellung von Umkehrdächern wird auf eine vorhandene Dachabdichtung oben eine Dämmung aufgebracht und so beschwert, daß die Dämmplatten unter den örtlich vorkommenden Windlasten nicht wegfliegen. Das geschieht zumeist mit einer Kiesschicht oder mit Betonplatten. Die Beschichtung schützt die Dämmung außerdem vor der Belastung durch das Sonnenlicht.*

Die Isolierung von Bodenplatten ist bekannt.
Es hat sich als vorteilhaft gezeigt, Bauwerke auf eine Isolierung aus XPS-Platten zu stellen. Dabei werden an die Qualität der XPS-Platten erhebliche Anforderungen gestellt. Die Platten müssen insbesondere eine hohe Dauerstandsfestigkeit zeigen. Die Erfindung geht davon aus, daß XPS-Platten, welche am Rand lediglich stumpf aneinander stoßen oder eine Stufenfalz-Verbindung zeigen oder eine Nut-Feder-Verbindung zeigen, an den Stoßstellen/Fugen unter den Bodenplatten Schwachstellen bilden. An den Stoßstellen können sich die Platten sehr viel leichter verformen als im übrigen Bereich. Ferner können die Fugen aufsteigende Feuchtigkeit oder sogar einen Wassereintritt begünstigen.

Perimeterdämmungen sind an Bauwerken außenseitig im erdberührten Bereich vorgesehen. Dort wird die Dämmung sehr stark durch Setzungen des Erdreiches, durch Feuchtigkeit und anstehendes Wasser belastet. Dabei sind die Stoßstellen/Fugen zwischen den verschiedenen XPS-Platten noch größere Schwachstellen als in der Anwendung auf Bodenplatten.

Umkehrdächer beinhalten eine neuzeitliche Form der Dachsanierung, wenn sich erweist, daß Dächer unzulänglich gedämmt sind.
Dann wird auf der vorhandenen Dachabdichtung eine Schicht aus XPS-Platten gelegt und gegebenenfalls mit Kies abgedeckt oder mit Betonplatten abgedeckt. Der Kies und die Betonplatten haben zwei vordringliche Aufgaben; erstens die Dämmung zu beschweren und am Fortfliegen zu hindern; zweitens die Dämmung gegen Sonneneinstrahlung zu schützen.

Nach der Erfindung werden deshalb XPS-Platten mit größerem Format hergestellt. *Durch die größeren Formate entfällt ein wesentlicher Teil der Fugen. Entsprechend geringer wird die Zahl der Fugen und das Risiko von Leckagen. Die größeren Formate können aus vorhandenen XPS-Platten (Ausgangsplatten) zusammen gesetzt werden. Nach der Erfindung werden vorzugsweise mindestens zwei Ausgangsplatten miteinander verschweißt oder verklebt. Dadurch ergibt sich bei Ausgangsplatten mit herkömmlichem Format quer zur Schweißnaht oder Klebenaht ein Maß von mehr als einem Meter, bei drei an den Längskanten miteinander verschweißten oder verklebten herkömmlichen Ausgangsplatten quer zur Schweißnaht oder Klebenaht mindestens ein Maß von 1, 5m. Für die Herstellung größerer Formate ist entscheidend, wie viel Verschnitt entsteht. Der Verschnitt ist Null, solange die größeren Formate allein durch Verbreiterung oder allein durch Verlängerung der Ausgangsplatten erfolgen können. Wenn beides, sowohl die Verbreiterung als auch die Verlängerung gewünscht ist, so ist ein Null-Verschnitt nur mit bestimmten Verhältnissen von Länge zu Breite der Ausgangsplatten darstellbar*. *Ein vorteilhaftes Verhältnis ist zum Beispiel 1:1 für alle gewünschten größeren quadratischen und rechteckigen Formate. Ein vorteilhaftes Verhältnis ist auch 2:1. Auch aus solchen Ausgangsplatten lassen sich ohne Verschnitt diverse größere rechteckige Formate herstellen.*

*Die erfindungsgemäßen großformatigen Platten können aus herkömmlichen Ausgangsplatten oder aus endlos extrudierten Schaumsträngen hergestellt werden. Als endlose Extrusionsstränge werden dabei Schaumstränge angesehen, die in mindestens einem mehrstündigen Extrusionsvorgang gefertigt werden.*
*Die größeren Plattenlängen entstehen dadurch, daß das Ablängen gegenüber dem Ablängen für herkömmliche XPS-Platten in größeren Abständen erfolgt. Zum Herstellen von Bodenplatten, können die erfindungsgemäßen Platten in den meisten Anwendungsfällen auch mit einer Länge hergestellt werden, welche dem Breitenmaß der Bodenplatte entspricht und gegebenenfalls sogar noch ein Übermaß zur Bildung eines gewünschten vorstehenden Sockels einschließt. Sofern ein kleineres Längenmaß gewünscht ist, weil der Sockel durch spezielle Platten gebildet wird, so versteht sich, daß auch solche Maße möglich sind, wenn darüber hinausgehende Längen empfohlen werden.*
*Solche Plattenlängen sind noch mit üblichen Lkw-Auflegern transportfähig. Mit Sonderfahrzeugen sind noch größere Längen transportfähig.*

*Solche Ausgangsplatten werden an den Längskanten miteinander verschweißt oder verklebt. Aus üblichen Ausgangsplattenbreiten von zum Beispiel 0,6m entstehen großformatige Platten von 1,8m. Die erfindungsgemäßen großen Platten für eine Fundamentplatte werden vorzugsweise anders transportiert als herkömmliche Platten. Herkömmlich werden die Platten liegend auf Holzpaletten transportiert. Das Aufladen und Abladen erfolgt mit einem Gabelstapler. Die erfindungsgemäßen Platten werden aufrecht stehend transportiert. Für solches Transportgut gibt es keine Paletten. Nach der Erfindung ist vorzugsweise dazu ein Geschirr vorgesehen.*
*Mit dem Geschirr lassen sich die erfindungsgemäßen Platten an der Unterseite und*/*oder an den Enden umfassen. Das kann mit U-förmigen oder L-förmigen Profilen erfolgen. Wenn nur zwei von einander beabstandete Profile vorgesehen sind, kann es von Vorteil sein, den Abstand der Profile durch mindestens eine Stange zu sichern, die an beide Profile angeschlagen wird. Die Stange schließt ein Verrutschen der Profile an der Unterseite der aufrecht stehenden Platten aus. Außerdem verhindert die Stange eine Belastung der Platten in Plattenlängsrichtung, die bei dünnen Platten zu einer Ausbeulung der Platten führen könnte. Gebeulte Platten sind schwieriger zu verlegen als gerade Platten.*

*Von Vorteil ist, wenn zu dem Geschirr Seile oder dergleichen Mittel gehören, die oberhalb der Platten zu der Gabel eines Gabelstaplers oder zum Haken eines Krans geführt werden können. Der Kran kann ein Baustellenkran sein, der an jedem Neubauvorhaben zu finden ist. Auf Grund des geringen Gewichtes der Platten kann der Kran auch durch einen Kranausleger am Lkw gebildet werden. Mit dem Kran kann jede Platte auf dem Planum für eine Bodenplatte so aufrecht stehend abgestellt werden, daß die Platte nach Lösen des Geschirrs nur noch umgekippt werden muß, um in die richtige Verlegestellung zu kommen. Besonders vorteilhaft sind dabei Kräne mit einer Fernsteuerung. Das erlaubt eine Steuerung des Krans durch einen Kranführer, der nicht nur beim Aufnehmen der Platte an besonders günstiger Stelle neben dem Lkw stehen kann sondern auch beim Absetzen der Platte an der Verlegestelle stehen kann.*
*Selbst, wenn die richtige Verlegestellung von ungeübtem Verlegepersonal anfänglich nicht 100%ig getroffen wird, ist es für das Verlegepersonal leicht, die Platte von Hand nachzupositionieren.*

*Die großformatigen Platten reduzieren nicht nur die Zahl der Fugen und das Risiko von Leckagen. Die großformatigen Platten reduziert auch die Verlegefehler, weil die Verlegefehler nach aller Erfahrung um so häufiger vorkommen, je größer die Zahl der zu verlegenden Platten ist. Das vorstehende Verlegen der großformatigen Platten erleichtert auch die Arbeit und reduziert den Verlegeaufwand. Trotz des bei so großen Platten einzusetzenden Krans ist die Verlegung weitaus wirtschaftlicher als die Verlegung einer größeren Vielzahl kleiner Platten ohne Kran. Das ist nicht ohne weiteres voraussehbar, wird aber durch die Praxis bestätigt.*

*Bei der Herstellung von großformatigen Platten für ein Umkehrdach und die Verlegung der Platten gilt das gleiche wie bei der Herstellung und Verlegung von Platten für eine Bodenplatte.*

*Der erdberührte Bereich einer Perimeterdämmung ist bei üblichen Wohnhäusern das Kellergeschoß. Im Kellergeschoß von Gebäuden werden zumeist nur die Mindesthöhen eingehalten, Die üblichen Plattenlängen von 2,6m decken alle die üblichen Kellergeschoßhöhen. Wo die Plattenlänge größer als die Geschoßhöhe ist, kann das Übermaß zur Bildung eines Sockels am Fuß der Gebäudewände genutzt werden. Eine solche Sockelbildung ist von Vorteil, weil damit ein Hinterlaufen von Niederschlagswasser hinter die Perimeterdämmung verhindert wird.*
*Es gibt aber auch Perimeterdämmungen für Parkebenen unter dem Gebäude. Dann können mehr großformatige Platten zur Plattendämmung und*/*oder noch größere Platten Anwendung finden. Für die noch größeren Platten können längere Ausgangsplatten Verwendung finden, die an den Längskanten miteinander verschweißt oder verklebt werden.*

*Mit der den großformatigen Platten* wendet sich die Erfindung einer Technik zu, welche um einiges umständlicher erscheint als die Extrusion breiterer XPS-Platten. Dem liegt die Erkenntnis zugrunde, daß die Extrusion breiterer XPS-Platten zwar eleganter erscheint und deshalb naheliegend ist, aber auf dem Wege bedeutende Risiken zu überwinden sind: die mit Treibmittel beladene Schmelze muß ganz unterschiedliche Wege zurücklegen, um aus dem Extruder an jede Stelle des Düsenspaltes zu gelangen. Dabei ändern sich Druck und Temperatur der Schmelze. Alle Bemühungen, dies auszugleichen, sind sehr schwierig, weil die verschiedenen Einflüsse auf das Schäumen von Polystyrol nicht proportional voneinander abhängen. Zum Teil werden daraus resultierende Qualitätsunterschiede erst langfristig deutlich.

Nach der Erfindung sollen die XPS-Platten entgegen der Hinweise in der EP2724843 am Rand miteinander zu breiteren Platten verschweißt oder verklebt werden. Dazu können übliche Ausgangsplatten verwendet werden. Übliche Platten werden mit Breiten von 500 bis 625mm und mit Längen von 1000 bis 1300mm bzw. 2600mm angeboten. Diese Platten können in gleichbleibend guter Qualität hergestellt werden, so daß auch die durch Verschweißen entstehenden breiteren Platten eine gleiche Qualität aufweisen. Es können XPS-Platten jeglicher Dicke miteinander verschweißt werden. Das gilt alle üblichen Dicken von 10mm bis 400mm, aber auch für extrem dünne und für extrem dicke Platten.

*Wahlweise findet die erfindungsgemäße Vergrößrung*/*Verbreiterung auch auf Platten mit kleineren Dicken Anwendung. Kleinere Dicken sind 8mm bis 20mm.*
Dabei können die XPS-Platten als Ausgangsplatten einstückig extrudiert sein oder durch Verkleben oder Verschweißen bereits zu dicken Platten miteinander verbunden sein.

### Die Verklebung kann durch Auftragung eines Klebers oder mit beidseitig wirksamen Klebebändern.

Beim Verschweißen werden die Schweißflächen angeschmolzen und die miteinander zu verbindenden Ausgangsplatten an den plastifizierten Platten aneinander gedrückt.

*Das Anschmelzen der Schweißflächen kann mit Heißluft oder durch Strahlungswärme erfolgen. Bei dem Anschmelzen mit Strahlungswärme wird eine Heizeinrichtung zum Beispiel in Form einer Heißplatte oder eines Heizschwertes im Abstand von der Schweißfläche angeordnet. Je nach Temperatur des Heizschwertes schmelzen die Schweißflächen schnell oder langsam an. Nach dem Anschmelzen der Schweißfläche wird die Heizeinrichtung entfernt und werden die zu verbindenden Ausgangsplatten gegeneinander gedrückt und miteinander verbunden.*

*Vorzugsweise erfolgt das Anschmelzen der Schweißfläche durch Übertragung von Berührungswärme.*
Das kann in einer Schweißstation geschehen, in der zwei zu verschweißende XPS-Platten an den Schweißflächen mit einer Heizfläche in Berührung gebracht werden, die sich über die gesamte betreffende Längskante erstrecken. Das sind an herkömmlichen XPS-Platten bis zu 2600mm.
Das kann eine gemeinsame Heizfläche in Form einer beidseitig berührten Heizplatte oder eines Heizschwertes sein. Die Heizflächen sind vorzugsweise elektrisch beheizt und mit einem Trennmittel beschichtet, so daß geschmolzenes Polystyrol nicht an den Heizflächen kleben bleibt.
*Sofern die Schweißvorrichtung die Form eines Heizschwertes hat, können gleichzeitig zwei Ausgangsplatten gegen das Heizschwert gedrückt werden. Die Schweißflächen werden dabei in sehr kurzer Zeit angeschmolzen. Anschließend werden die Ausgangsplatten von dem Heizschwert zurückgezogen, das Heizschwert entfernt und die Ausgangsplatten gegeneinander gedrückt und dadurch miteinander verbunden. Dieses Verfahren ist ein diskontinuierliches Verfahren, bei dem es darauf ankommt, eine gleichmäßige Erwärmung der gesamten Schweißfläche zu erreichen.*

*Vorzugsweise erfolgt die Verschweißung der Platten kontinuierlich.*
*Eine kontinuierliche Verschweißung ist von der oben beschriebenen Herstellung von XPS-Schaumplatten mit großer Dicke bekannt. Dabei werden die Ausgangsplatten mit geringem Anstellwinkel gegen ein Heizschwert gefahren und unmittelbar nach Berührung mit dem Heizschwert gegeneinander gedrückt.*
*Dieses Verfahren ist nur möglich, weil die zur Herstellung von dicken Platten verwendeten Ausgangsplatten in dem notwendigen Umfang biegsam sind, wenn sie an den Breitflächen miteinander verbunden sind.*

*Bei den Ausgangsplatten, die an den Schmalseiten bzw. am Rand miteinander verschweißt werden, sind die Ausgangsplatten so steif, daß keine vergleichbare Biegsamkeit vorliegt. Gleichwohl wendet sich die Erfindung dieser Technik zu, indem ein sehr dünnes Heizschwert verwendet wird. Dünn ist ein Heizschwert nach der Erfindung mit einer Dicke von kleiner*/*gleich 5, vorzugsweise mit einer Dicke von kleiner*/*gleich 4mm noch weiter bevorzugt mit einer Dicke von kleiner*/*gleich 3mm und höchst bevorzugt mit einer Dicke von kleiner*/*gleich 2mm. Bei geringer Dicke verliert das Heizschwert die Stabilität, die notwendig ist, um der Belastung der der Ausgangsplatten zu widerstehen. Sobald sich das Heizschwert verbiegt, kommt es zu einer Betriebsstörung.*
*Nach der Erfindung wird die Widerstandsfähigkeit des Heizschwertes um Vieles erhöht, indem das Heizschwert unter Zugspannung gesetzt wird. Das geschieht vorzugsweise mit Hilfe von Kragen, die oberhalb und unterhalb Ausgangsplatten angeordnet werden und an denen eine Zugeinrichtung angeschlagen werden kann. Vorteilhafte Zugeinrichtungen sind zum Beispiel hydraulische oder pneumatische Kraftkolben, mit denen die Spannung gut kontrollierbar ist und mit denen eine Längenänderung des Heizschwertes durch Erwärmung oder Abkühlung im Hinblick auf die Messung der Materialspannung ausgeglichen werden kann. Der Luftdruck im pneumatischen Kraftkolben bzw. im hydraulischen Kraftkolben ist ein Spiegelbild der Zugspannung im Heizschwert. Solange die Zugspannung in dem Heizwert groß genug ist, kann ein Druck der zu verbindenden Ausgangsplatten auf das Heizschwert keine betriebsstörende Verformung des Heizschwertes verursachen.*
*Vorzugsweise wird das Heizschwert stationär angeordnet und werden die zu verbindenden Ausgangsplatten beiderseits des Heizschwertes entlang geführt. Von beiden Seiten wird über die Ausgangsplatten Druck gegen das Heizschwert ausgeübt. Bei der Berührung mit dem Heizschwert schmelzen die Schweißflächen an. Nach Verlassen des Heizschwertes werden die Ausgangsplatten mit den angeschmolzenen Flächen gegeneinander gedrückt.*

*Die Beheizung des Heizschwertes kann elektrisch oder mit Öl oder mit Heizgas erfolgen. Vorzugsweise wird Öl oder Heizgas verwendet, das auch durch geringe Öffnungsweiten der notwendigen Leitungen in dem erfindungsgemäßen Heizschwert strömen kann. Die Temperatur des Heizmittels und damit auch die Temperatur des Heizschwertes kann genau im Bereich des Schmelzpunktes des zu verschweißenden Polystyrolschaumes liegen. Dann ist die Schweißgeschwindigkeit gering. Die Temperatur des Heizschwertes kann auch deutlich höher liegen, wenn mit einer entsprechend höheren Schweißgeschwindigkeit gefahren wird. Das führt bei entsprechender Abstimmung der Schweißgeschwindigkeit auf die Temperatur nicht zu einer Qualitätseinbuße der Schweißung. Die Schweißgeschwindigkeit ist zugleich die Geschwindigkeit, mit der Ausgangsplatten an dem Heizschwert bewegt wird.*

*Wahlweise findet die Herstellung großformatiger XPS-Platten inline mit dem Extrudieren der Polystyrolschaumplatten statt. Dann werden vorzugsweise zwei Extrusionsstränge parallel zueinander erzeugt und miteinander verschweißt. Das Ablängen erfolgen nach dem Verschweißen. Die Schweißgeschwindigkeit wird dabei der Extrusionsgeschwindigkeit angepaßt; das gleiche gilt für die Temperatur des Heizschwertes.*

Soweit die XPS-Platten als Ausgangsplatten einen Stufenfalz oder einen Nut/Feder-Rand aufweisen, werden der Stufenfalz und der Nut/Feder-Rand vorzugsweise abgetragen. Das kann zum Beispiel durch Fräsen, Sägen oder mittels eines Glühdrahtes als Trennvorrichtung erfolgen und erleichtert das Verschweißen mit einem Heizschwert oder dergleichen. Wahlweise können die XPS-Platten aber auch am Stufenfalz oder dem Nut/Feder-Rand verschweißt werden. Dazu findet dann vorzugsweise eine Erwärmung der Schweißflächen mit Heißgas statt, das in alle Winkel der Fuge dringen kann.

Wahlweise können die XPS-Platten dabei mit einem Roboter bewegt werden. Die Roboter erlauben die Verwendung von fest angeordneten Heizflächen. Mit Robotern können auch die zu verschweißenden XPS-Platten vom Stapel genommen und die entstehenden neuen Platten wieder gestapelt werden.
Die Roboter sind allerdings aufwendig und benötigen hohe Stückzahlen, um wirtschaftlich zu sein.
Einfacher und wirtschaftlicher bei geringen Stückzahlen sind herkömmliche Führungen für die XPS-Platten, wobei Schieber und Anschläge die Positionierung der XPS-Platten und den Andruck an den Heizflächen bewirken. Herkömmliche Führungen sind Rollgänge. Im Bereich der Heizflächen können Kugelgänge von Vorteil sein. Bei solchen Führungen sind Kugeln vorgesehen, die sich in alle Richtungen drehen lassen und zum Beispiel eine Zuführung der XPS-Platten quer zu den Heizflächen und nach dem Verschweißen einen Abtransport der verschweißten Platten in Längsrichtung der Heizflächen zulassen.
Bei einer solchen Führung ist auch von Vorteil, wenn die XPS-Platten von zwei Seiten und miteinander fluchtend zugeführt werden und wenn die Heizflächen nach der Erwärmung der Schweißflächen abgesenkt werden können oder nach oben aus dem Spalt zwischen den XPS-Platten herausgezogen werden. Anschließend findet das Zusammendrücken der XPS-Platten mit Schweißdruck für die notwendige Zeitdauer statt.

Für eine Verschweißung kann in erheblichem Maß Polystyrolschaum an der Schweißfläche abgeschmolzen wird, so daß ganz sicher geschmolzenes Material an der Schweißfläche zur Verfügung steht, wenn die XPS-Platten an ihrem Rand aneinander gedrückt werden. Vorzugsweise wird jedoch nicht mehr als 0,6mm, noch weiter bevorzugt nicht mehr als 0,4mm und höchst bevorzugt höchstens 0,2mm des Polystyrolschaumes von den Schweißflächen abgeschmolzen. Durch geringes Abschmelzen verringert sich die notwendige Haltezeit. Die Haltezeit ist die Zeit, für die nach Andrücken der beiden zu verbindenden XPS-Platten ein gewisser Druck aufrecht erhalten werden muß, damit eine feste Verbindung entsteht.
Das Maß der Abschmelzung von Polystyrolschaum, der Schweißdruck und die Haltezeit können mit wenigen Versuchen optimiert werden, indem bei unterschiedlichen Randbedingungen eine Verschweißung erfolgt und die Schweißnaht anschließend auf ihre Festigkeit geprüft wird. Da die erfindungsgemäße Schweißnaht nicht in der Plattenebene liegt sondern quer dazu erfolgt, wird die Wasserdampfdiffusion bei den oben erläuterten Anwendung durch die erfindungsgemäße Schweißnaht *nicht* behindert. Für diese Anwendungen kann die Diffusionsoffenheit unberücksichtigt bleiben.

*Soweit konfektionierte XPS-Platten für die Herstellung breiterer Platten verwendet werden, können die durch Verschweißen entstandenen neuen Platten wahlweise ganz oder teilweise nachbearbeitet werden. Dabei kann ausreichend sein, nur eine Bearbeitung an der Schweißnaht vorzunehmen. Es kann auch eine Bearbeitung an allen Randflächen stattfinden, zum Beispiel zur Erzeugung definierter Längen und Breiten oder um eine neue Glattkante oder einen Stufenfalz oder Nut*/*Feder zu erzeugen.*
*Es kann auch eine allseitige Bearbeitung der entstandenen neuen Platten erfolgen. Die Bearbeitung kann rein mechanisch sein. Es kann auch eine thermische Bearbeitung erfolgen.*

Die Verschweißung kann unmittelbar nach der Extrusion der XPS-Platten erfolgen. Dann kann es von Vorteil sein, den austretenden Extrusionsstrang erst abzulängen und an einem Rand abzufräsen, um die Schweißflächen zu schaffen, so daß teilbearbeitete XPS-Platten entstehen, die zwar an den übrigen Flächen noch die Extrusionshaut zeigen, aber an den zuvor bearbeiteten Flächen miteinander verschweißt werden. Die Bearbeitung aller anderen Flächen erfolgt dann an den verschweißten Platten. Dies hat den Vorteil, daß gegebenenfalls gewünschte Breiten-Toleranzen leicht eingehalten werden können.

Die Verschweißung kann auch mit XPS-Platten erfolgen, die aus dem Plattenlager kommen. Üblicherweise werden die XPS-Platten nach der Extrusion mehrere Wochen gelagert, um dem verwendeten Treibmittel Gelegenheit zu geben, aus den XPS-Platten auszudiffundieren. Das austretende Treibmittel wird durch eindiffundierende Umgebungsluft ersetzt.
Die Verwendung von Lagerplatten vereinfacht die Lagerhaltung. Die Lagerhaltung ist ohnehin schon aufwendig, weil üblicherweise diverse Platten unterschiedlicher Qualität und unterschiedliche Dicken und unterschiedlicher Randausbildung vorgehalten werden müssen. Bei der unterschiedlichen Randausbildung wird grob unterschieden zwischen Glattkant, Stufenfalz und Nut/Feder.
*Glattkant beschreibt eine ebene Randfläche. Aneinander gesetzte Platten mit Glattkant stoßen mit ebenen Randflächen aneinander.*
*Stufenfalz beschreibt einen Plattenrand mit einer Stufe(Vorsprung). Infolgedessen überlappen sich die aneinander stoßenden Platten mit ihrer vorragenden Stufe. Die Stufe verläuft üblicherweise aber nicht gleichmäßig am Plattenrand. Vielmehr sind von vier Randflächen einer rechteckigen Platte zwei aneinander stoßende Randflächen an der gleichen Stelle(an einer liegenden Platte zum Beispiel oben) mit einer vorragenden Stufe versehen. Die verbleibenden beiden Randflächen stoßen gleichfalls aneinander, besitzen auch eine vorragende Stufe, aber an anderer Stelle (in vorstehendem Beispiel unten). Platten mit Nut*/*Feder besitzen bei rechteckiger Form zwei Randflächen, in denen sich eine Nut befindet. Die verbleibenden Randflächen sind mit einer Feder versehen. Die Feder wird durch einen Vorsprung an der Randfläche gebildet, der in die vorbeschriebene Nut passt. Wie bei den Stufen wird dabei unterschieden zwischen zwei aneinander stoßenden Randflächen(paar) und den anderen aneinander stoßenden Randflächen(paar). Das eine Randflächenpaar ist mit gleichen Nuten versehen, das andere Randflächenpaar ist mit gleichen Federn versehen.*

Wenn noch Platten unterschiedlicher Breiten bevorratet werden müssen, vervielfacht sich die Lagerhaltung entsprechend. Im Sinne einer
weiteren Vereinfachung der Lagerhaltung werden vorzugsweise Platten mit Glattkant verschweißt. Soweit ein Stufenfalz oder ein Nut/Feder-Rand gewünscht ist, kann ein solcher Rand nach dem Verschweißen angearbeitet werden.

Sollen aus XPS-Platten mit Stufenfalz oder Nut-Feder-Rand vom Lager breite Platten entstehen, so werden die zu verschweißenden Platten an einer Seite glatt gefräst, um Schweißflächen zu erzeugen. Zwei so miteinander verschweißten Platten haben dann allerdings nicht ganz die doppelte Breite. Das läßt sich gegebenenfalls mit Zwischenstücken an der Schweißstelle ausgleichen.

Die XPS-Platten können auch bei der Verlegung miteinander verschweißt werden. Dann ist eine mobile Schweißeinrichtung vorgesehen.

Durch die Verschweißung vervielfachen sich die Plattenformate. Es entstehen neue Platten zum Beispiel mit einer Breite von mindestens 0,8m, vorzugsweise mit einer Breite von mindestens 1,2m noch weiter bevorzugt mit einer Bereite von mindestens 1,6m und höchst bevorzugt mit einer Breite von mindestens 2m. Je nach Wunsch entstehen Platten mit doppelter Breite, dreifacher Breite, vierfacher Breite usw. Die Breiten sind nur durch die Handhabungsbedingungen, Transportbedingungen und Lagerbedingungen begrenzt. Eine Verdoppelung der Breite ist für die Lagerhaltung und den Transport unproblematisch, weil dazu bisherige Paletten verwendet werden können, auf denen bisher schon immer zwei Platten nebeneinander liegend angeordnet werden konnten.
Bei größeren Breiten können Spezialpaletten erforderlich werden.
Gegebenenfalls müssen die Paletten auch stehend transportiert werden.

Zur Zuführung der Ausgangsplatten dienen wahlweise Rollengänge, desgleichen zum Abführen der entstehenden neuen Platte. Im Bereich der Verschweißung können Kugelgänge Verwendung finden, deren Kugeln drehbeweglich gelagert sind und eine Bewegung in jeder Richtung erlauben. Von Vorteil ist, die Platten im Bereich der Verschweißung nicht nur unten zu unterstützen, sondern auch oben, nach Möglichkeit auch seitlich zu führen.
Die obere Führung kann dazu nachgiebig angeordnet sein und auch als Kugelgang ausgebildet sein, der eine Bewegung in jeder Richtung erlaubt. Von den seitlichen Führungen einer jeden Platte kann wiederum eine fest und die andere nachgiebig angeordnet werden.

Von den seitlichen Führungen ist diejenige heb- und senkbar angeordnet, die einem Abführen der fertigen Platte sonst im Wege steht.

Die erfindungsgemäße Verschweißung kann auch auf die Verlängerung der Platten Anwendung finden.
Es können durch Verschweißung zum Beispiel Plattenlängen von mindestens 1,8m, vorzugsweise von mindestens 2,7m, noch weiter bevorzugt von mindestens 3,6m und höchst bevorzugt von mindestens 4,5m entstehen. Das schließt auch noch längere Platten ein. Die Herstellung breiterer Platten kann unabhängig von der Verlängerung der Platten erfolgen. Vorzugsweise werden die Platten jedoch sowohl länger hergestellt als auch breiter hergestellt, um größere Flächen mit einer geschlossenen Plattenfläche zu überdecken. In dem Falle werden die Platten vorzugsweise zunächst verlängert und die verlängerten Platten anschließend zu breiteren Platten miteinander verbunden. Auf dem Wege entstehen nur geradlinige Fugen, für die beim Schweißen eine gerade Heizvorrichtung und einfach Andrückvorrichtungen verwendet werden können.

Die Verlängerung der Platten ist dann vorteilhaft, wenn wegen kurzer Lieferzeit XPS-Platten vom Lager genommen werden müssen. Die XPS-Platten werden dann in Längsrichtung miteinander verschweißt. Es entstehen zum Beispiel neue Platten mit einer Länge von 1,8m Dadurch ergibt sich eine Verdoppelung oder Verdreifachung oder Vervierfachung der Länge usw. Es lassen sich auf dem Wege ohne weiteres Plattenlängen von mindestens 5m oder mindestens 7,5m oder mindestens 10m erreichen. Der Plattenlänge sind wie bei der Breite lediglich durch notwendige Handhabbarkeit, Lagerfähigkeit und Transportfähigkeit Grenzen gesetzt.

Die Plattenlänge läßt sich aber auch auf anderem Wege vergrößern, nämlich bei der Extrusion und dem anschließenden Ablängen des Extrusionsstranges. Der Extrusionsstrang kann in beliebigen Abständen abgelängt werden. Die Abstände können gemessen werden. Zur Messung sind verschiedene Einrichtungen geeignet, insbesondere ein Lasermesser.
Wenn der Lasermesser mit der Trenneinrichtung gekoppelt ist, so daß die Trenneinrichtung bei Erreichen der gewünschten Länge von dem Lasermesser einen Startimpuls erhält, muß nur die Länge der Extrusionsstrang-Abschnitte eingestellt werden.
Auf dem Wege sind die gleichen Längen wie beim erfindungsgemäßen Verschweißen ohne weiteres erreichbar.

Als Trenneinrichtung sind insbesondere Sägen geeignet.

Diese Herstellung durch Ablängen größerer Stücke/Abschnitte vom Extrusionsstrang empfiehlt sich, wenn ausreichend lange Lieferfristen gegeben sind, die eine anschließende Lagerung erlauben.

Zur besseren Handhabbarkeit sind vorzugsweise an den erfindungsgemäßen Platten Laschen angeklebt. Die Laschen können aus flachem Material, zum Beispiel aus einer reißfesten Kunststoff-Folie bestehen. Die Laschen tragen nicht auf, wenn die Platten im Stapel liegen. An den Laschen lassen sich breite und/oder lange Platten erfassen und von Hand oder mit maschinellen Hilfsmitteln in die gewünschte Verlegestellung gebracht werden.

Für die Verlegung ist ein Verlegeplan von Vorteil, der Verlegeplan wird auf Basis des Bauplanes für das Gebäude erstellt. Anhand des Verlegeplanes können die Platten im Übrigen so hergestellt werden, daß bei der Verlegung der Platten keine Konfektionierung/Zuschneiden mehr erforderlich ist. Das verringert die Kosten und die Bauzeit.

In der Zeichnung sind schematisch verschiedene Ausführungsbeispiele der Erfindung dargestellt.

Die Fig. 1 bis 5 zeigen die bekannte Herstellung dicker Platten nach der EP2724843. Fig. 1 zeigt zwei Einzelplatten 2 und 3 aus Polystyrolschaum mit einem Raumgewicht von 35 kg pro Kubikmeter, die auf verschiedenen Wegen zusammengeführt werden. Dabei werden die Platten 2 und 3 mit Hilfe nicht dargestellter Führungen mit einem Heizkeil 4 in Berührung gebracht. Der Heizkeil 4 besitzt eine Temperatur, welche 400 Grad Celsius über der Schmelz-/Erweichungstemperatur des Polystyrols der Platten 2 und 3 liegt. Die Platten besitzen eine übliche Länge von 1,25 m bei einer üblichen Breite von 0,6 m sowie eine Dicke von 80 mm. Die Platten 2 und 3 stammen aus einer Extrusion und sind an den vier Kanten sowie der Berührungsfläche durch Fräsen bearbeitet.
Jede Platte 2 und 3 wird innerhalb von 2 Sekunden unter Berührung mit dem Heizkeil an diesem vorbeigeführt. Dabei findet eine Schockplastifizierung der Berührungsflächen/Schweißflächen statt.

Unmittelbar nach dem Heizkeil 4 werden die Platten 2 und 3 in einen Walzenspalt mit Walzen 5 geführt. Die Walzen 5 drücken die Platten 2 und 3 zusammen, so daß eine verschweißte Polystyrolschaumplatte 1 mit einer Dicke von rund 160 mm entsteht.

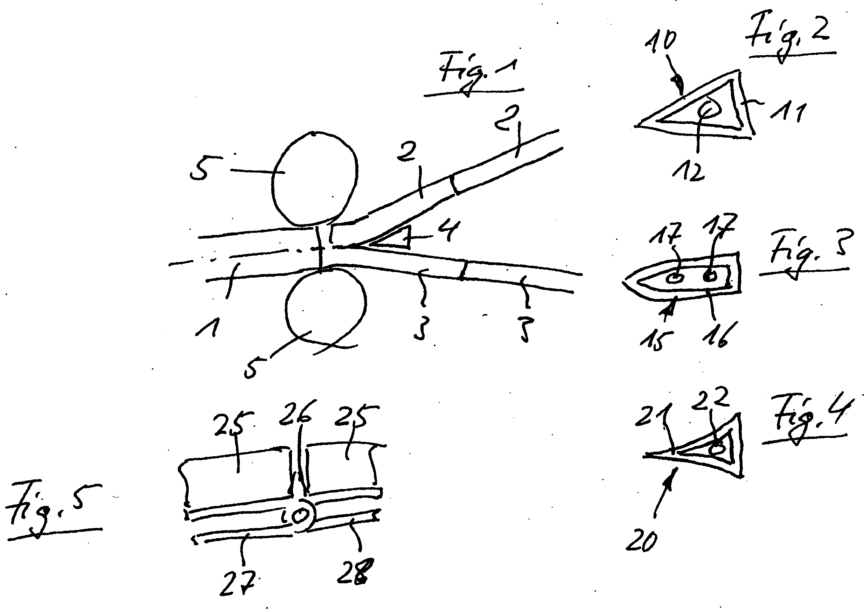

Muster, die nach Fig. 1 erzeugt worden sind, zeigen verschweißte Platten 1 mit einer Wasserdampfdiffusionswiderstandzahl von 130. Der
Wasserdampfdiffusionswiderstand/Dampfsperrwert ergibt sich durch Multiplikation der Widerstandszahl mit der Dicke der Platte 1 in Metern. Der Sperrwert gibt an, um welchen Faktor die Platten 1 dichter sind als eine gleich dicke ruhende Luftschicht. Der Faktor ist im Ausführungsbeispiel 20,8.
Die Diffusionsbestimmung ist nach DIN EN 12086 erfolgt.

Desweitern zeigt die Schweißnaht eine Festigkeit von 0,41 Newton pro Quadratmillimeter. Dies ist um einiges Höher als die Mindestfestigkeit. Daraus ist zu schließen, daß die Schweißnahtdicke noch deutlich reduziert werden kann. Dazu kann die Schweißtemperatur reduziert und/oder die Einwirkungsdauer des Heizkeiles auf die Schweißflächen reduziert werden.

Die Fig. 2 zeigt einen Heizkeil 10 mit einer Hülle 11 aus warmfestem Stahlblech und einer innen liegenden elektrischen Heizspirale 12. Die Keilflächen stehen im Ausführungsbeispiel in einem Winkel von 8 Grad zueinander, in anderen Ausführungsbeispiel bis 15 Grad. Der Heizkeil erstreckt sich über die gesamte Breite der zu verschweißenden Platten. In Längsrichtung der Platten erstreckt sich der Heizkeil über 50mm.

Fig. 3 zeigt ein Heizschwert 15 für ein anderes Ausführungsbeispiel.
Das Heizschwert 15 besitzt eine Hülle 16 aus Glaskeramik.
In dem Heizschwert 15 sind zwei elektrische Heizspiralen 17 vorgesehen.
Die Berührungsflächen des Heizschwertes 15 sind konvex gewölbt.
Die Länge des Heizschwertes 15 entspricht der Länge des Heizkeiles nach Fig.2.
Die Dicke des Heizschwertes 15 beträgt 10 mm.
Um eine Polystyrolschaumplatte zumindest weitgehend/auf dem größten Teil der Schwertfläche mit dem Heizschert 15 in Berührung zu bringen, ist eine erhebliche Krümmung der Polystyrolschaumplatten entsprechend der Krümmung der Heizschwertberührungsfläche erforderlich. Nach Verlassen des Heizschwertes 15 müssen die Polystyrolschaumplatten in die entgegengesetzte Richtung gebogen werden, um in den Walzenspalt zu gelangen und dort den zum Verschweißen notwendigen Druck zu erfahren.

Fig. 4 zeigt ein Heizschwert 20 mit einer Hülle 21 und einer innen liegenden elektrischen Heizspirale 22. Die Berührungsflächen des Heizschwertes 20 sind konkav gewölbt.
Die Polystyrolschaumplatten werden vor der Berührung des Heizschwertes 20 in eine der konkaven Krümmung des Heizschwertes 20 angepaßte Krümmung gebracht, so daß die Polystyrolschaumplatten mit einem wesentlichen Teil der Heizschwertfläche in Berührung kommen. Der Vorteil der konkav gestalteten Schwertflächen ist, daß die Polystyrolschaumplatten nach Verlassen des Heizschwertes 20 nur entlastet werden müssen, um sich aufgrund der inneren Spannung in die ursprüngliche Form zurückzubilden, so daß sie ohne weiteres Zutun in den Walzenspalt gelangen können.

Obige Ausführungsbeispiele betreffen die Verschweißung von XPS-Schaumplatten zur Herstellung von dicken Platten. Dabei werden die Platten an den Breitseiten miteinander verbunden.
*Die erfindungsgemäße Verschweißung von XPS-Schaumplatten an den Schmalseiten bzw. dem Rand dient der Herstellung großformatiger Platten. Dazu werden die XPS-Schaumplatten in eine Schweißstation transportiert.*

Fig. 5 zeigt ein Plattenband mit Plattenelementen 27 und 28, mit denen Polystrolschaumplatten 25 einer Schweißvorrichtung zugeführt werden, welche die Platten an den Schweißflächen plastifiziert. Dabei liegen die Polystyrolschaumplatten 25 auf den Plattenelementen 27 und 28 auf.
Zwischen den Plattenelementen 27 und 28 sind Mitnehmer 26 vorgesehen.
Seitlich sind Führungen vorgesehen
In anderen Ausführungsbeispielen ist ein Rollengang für die Zuführung von XPS-Platten in eine Schweißstation vorgesehen.

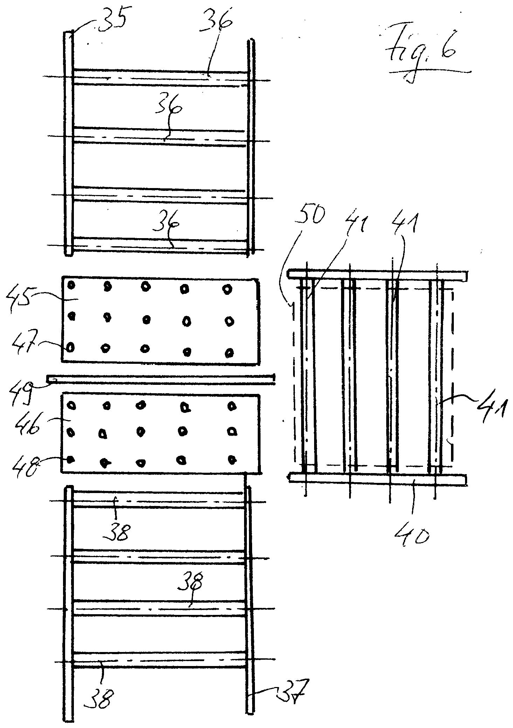

Fig. 6 zeigt eine Schweißstation mit einem Heizschwert 49, das heb- und senkbar angeordnet ist. Zu dem Heizschwert 49 führen zwei Plattenzuführungen, von denen die eine Zuführung aus einem Rollgang 35 mit Rollen 36 und einem Kugelgang 45 mit Kugeln 47 besteht und die andere Zuführung aus einem Rollgang 37 mit Rollen 38 und einem Kugelgang 46 mit Kugeln 48 besteht. Über beide Zuführungen werden XPS-Platten zugeführt und gegen das hoch stehende Heizschwert 49 gedrückt, bis die Berührungsflächen der Platten mit dem Heizschwert angeschmolzen sind. Anschließend wird das Heizschwert 49 abgesenkt und die Platten mit den angeschmolzenen Flächen gegeneinander gedrückt. Dabei liegt die Platten auf den Kugelgängen 45 und 46. Nach dem Verschweißen werden die entstandenen neuen Platten 50, die strich-punktiert dargestellt sind, auf den Rollgang 40 geschoben und über die Rollen 41 abgeführt.

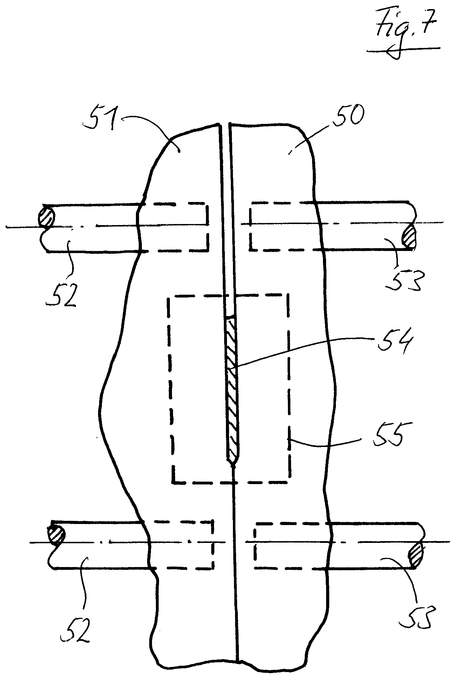

*Fig. 7* *zeigt ein weiteres Ausführungsbeispiel für die Herstellung großformatiger Platten. Dabei ist ein feststehendes dünnes Heizschwert 54 vorgesehen, dem XPS-Platten zugeführt werden. Die Zuführung erfolgt über zwei Rollengänge 52 und 53.* *Fig.* 7 *zeigt zwei XPS-Platten 50 und 51 im Ausschnitt. Das Heizschwert 54 ist unterhalb und oberhalb der XPS-Platten 50 und 51 mit einer Halterung 55 versehen. Die eine Halterung55 ist fest in der Schweißstation angeordnet. Die andere Halterung 55 ist beweglich in einem Portal der Schweißvorrichtung gehalten, das die beiden Rollengänge 52 und 53 überspannt, so daß die XPS-Platten durch das Portal hindurch bewegt werden können. Die bewegliche Halterung 55 kann mit einem hydraulisch betriebenen Kraftkolben gespannt werden, so daß in dem Heizschwert 54 eine Spannung entsteht, die eine Verformung des Heizschwertes 54 verhindert, wenn das Heizschwert 54 durch den Druck der Platten 50 und 51 belastet wird. Die Platten 50 und 51 werden auf dem Rollgang durch nicht dargestellt seitliche Führungen gegeneinander und gegen das zwischen beiden Platten 50 und 51 stehende Heizschwert gedrückt werden, während die Platten 50 und 51, während die Platten 50 und 51 auf den Rollgängen 52 und 53 zugleich an dem Heizschwert 54 vorbei bewegt werden. Im Betriebsfall werden dabei die Berührungsflächen der Platten 50 und 51 von dem entsprechend temperierten Heizschwert angeschmolzen, so daß die Platten 50 und 51 nach Verlassen des Heizschwertes 54 mit einander verschweißen. Im Ausführungsbeispiel sind die Führungen federnd gelagert. In anderen Ausführungsbeispielen werden Kraftkolben eingesetzt, die den notwendigen Druck auf die Führungen ausüben.*
*Der Bewegungsantrieb für die Platten 50 und 51 wird im Ausführungsbeispiel durch Ketten in anderen Ausführungsbeispielen durch Bänder gebildet, die über den Platten 50 und 51 angeordnet sind und mit Haken zwischen die Platten greifen. Zugleich werden die zu den Ketten*/*Bändern gehörigen Kettenräder*/*Bandrollen und der Antrieb von weiteren Portalen getragen, welche die Rollgänge 52 und 53 überspannen.*

## Patentansprüche

1. Herstellung von Kunststoffschaumplatten aus mindestens zwei Ausgangsplatten, insbesondere von halogenfrei getriebenen Polystyrolschaumplatten als Ausgangsplatten zu neuen Platten,
wobei die Platten thermisch miteinander verschweißt oder verklebt werden und
wobei die Schweißflächen der Ausgangsplatten extrusionshautlos sind
**dadurch gekennzeichnet, daß** die
a) Ausgangsplatten am Rand miteinander verschweißt oder verschweißt werden,
b) wobei die Ausgangsplatten im Falle der Verschweißung durch die Erwärmung an den Schweißflächen des Plattenrandes plastifiziert werden
c) wonach die Ausgangsplatten an den Schweißflächen gegeneinander gedrückt werden
d) wobei die Ausgangsplatten solange gegeneinander gedrückt werden, bis die Schweißnaht durch Abkühlung ausreichende Festigkeit entwickelt hat
e) wobei durch Verschweißung oder Verklebung neue Platten
mit mindestens einer Breite von 0,8m, vorzugsweise mindestens einer Breite von 1,2 und noch weiter bevorzugt mindestens einer Breite von 1,6m und höchst bevorzugt mindestens einer Breite von 2m gebildet werden

2. Herstellung nach Anspruch 1,
**dadurch gekennzeichnet, daß** Platten
mit mindestens einer Länge von Im, vorzugsweise mindestens einer Länge von 2,7m, noch weiter bevorzugt mindestens einer Länge von 3,6m und höchst bevorzugt von mindestens einer Länge von 4.5m hergestellt werden

3. Herstellung nach Anspruch 1 oder 2, **dadurch gekennzeichnet, daß** Platten aus vorkonfektionierten Ausgangsplatten hergestellt werden oder aus endlos hergestellten Extrusionssträngen durch Verkleben oder Verschweißen der Extrusionsstränge und anschließendes Ablängen der miteinander verbunden Extrusionsstränge hergestellt werden.

4. Herstellung nach einem der Ansprüche 1 bis 3, **gekennzeichnet durch** Verschweißen mittels eine Heizschwertes, wobei die zu verbindenden Platten oder Extrusionsstränge beiderseits des Heizschwertes in Schweißstellung gebracht werden und deren Schweißflächen mittels des Heizschwertes berührungsfrei oder durch Berührung mit dem Heizschwert angeschmolzen werden.

5. Herstellung nach einem der Ansprüche 1 bis 4, **dadurch gekennzeichnet, daß**
a) die miteinander zu verschweißenden Ausgangsplatten von beiden Seiten des Heizschwertes gegen das Heizschwert geführt werden
b) die Schweißflächen auf Schweißtemperatur erwärmt werden
c) das Heizschwert nach dem Anschmelzen der Schweißflächen noch unten oder oben aus der Fuge zwischen beiden Ausgangsplatten entfernt wird
d) die Ausgangsplatten anschließend mit den Schweißflächen gegeneinander gedrückt werden

6. Herstellung nach einem der Ansprüche 1 bis 4, **dadurch gekennzeichnet, daß**
a) das Heizschwert ortsfest angeordnet ist
b) die miteinander zu verschweißenden Ausgangsplatten oder Extrusionsstränge von beiden Seiten an dem Heizschwert vorbeigeführt werden, so daß die Schweißflächen anschmelzen
c) die Ausgangsplatten anschließend mit den Schweißfläche gegeneinander gedrückt werden
d) die miteinander verbundenen Extrusionsstränge anschließend abgelängt werden

7. Herstellung nach einem der Ansprüche 1 bis 6, **dadurch gekennzeichnet, daß** beim Anschmelzen des Kunststoffschaumes an einer Schweißfläche höchstens eine Schaumschicht von 0,6mm, vorzugsweise höchstens von 0,4mm und noch weiter bevorzugt von höchstens 0,2mm abgeschmolzen wird.

8. Herstellung nach einem der Ansprüche 1 bis 7 **gekennzeichnet durch** Verwendung eines ortsfesten Heizschwertes mit einer Dicke von kleiner/gleich 5mm, vorzugsweise einer Dicke von kleiner/gleich 4mm, noch weiter bevorzugt mit einer Dicke von kleiner/gleich 3mm und einer Halterung des Heizschwertes oberhalb und unterhalb der Platten, wobei mittels der Halterungen eine Zugspannung in das Heizschwert gebracht wird.

9. Herstellung nach Anspruch 8, **gekennzeichnet durch** Verwendung eines hydraulischen oder pneumatischen Kraftkolbens zur Aufbringung der Zugspannung, wobei die Zugspannung über den Kolbendruck geregelt wird.

10. Herstellung nach einem der Ansprüche 1 bis 9, gekennzeichnet Herstellung von Platten für Gebäudebodenplatten, Dachdämmung und Perimeterdämmung mit einer Länge, die gleich der Breite der Bodenplatte, gegebenenfalls zusätzlich vorgesehener Sockel oder der Breite der gedämmten Dachfläche oder der Höhe der vorgesehenen Perimeterdämmung, gegebenenfalls zuzüglich eines Sockels ist.

11. Herstellung nach Anspruch 10, **gekennzeichnet durch** Lkw-Transport mit aufrecht stehenden Platten, wobei zumindest beim Verlegen der Platten auf der Baustelle ein Geschirr verwendet wird, das die Platten mit zwei Profilstücken im Abstand unterfaßt und mit Seilen oder dergleichen oberhalb der Platten an einen Kranhaken angeschlagen wird.

12. Herstellung nach Anspruch 11, **dadurch gekennzeichnet, daß** die Profilstücke mit mindestens einer Stange voneinander auf Abstand gehalten werden.

13. Herstellung nach einem der Ansprüche 1 bis 12, **dadurch gekennzeichnet, daß** die verschweißten und abgelängten Platten quer zur Zuführung der Ausgangsplatten abgefördert werden.

14. Herstellung nach einem der Ansprüche 1 bis 13, **gekennzeichnet durch** die Verwendung von Rollengängen für die Zuführung der Ausgangsplatten und das Abführen der neuen Platten wobei im Bereich der Verschweißung Kugelgänge verwendet werden.

15. Herstellung nach Anspruch 14, **dadurch gekennzeichnet, daß** die Platten im Bereich der Verschweißung zusätzlich oben mit einem nachgiebig angeordneten Kugelgang gehalten werden.

16. Herstellung nach einem der Ansprüche 1 bis 15, **dadurch gekennzeichnet, daß** die verschweißten Platten ganz oder teilweise nachbearbeitet werden.

17. Herstellung nach Anspruch 8, **dadurch gekennzeichnet, daß** die verschweißten Platten an der Oberfläche mechanisch und/oder thermisch bearbeitet werden.

18. Herstellung nach einem der Ansprüche 1 bis 9, **dadurch gekennzeichnet, daß** die breiteren und/oder längeren Platten mit Laschen als Verlegehilfen versehen sind.
